# EUROPÄISCHE PATENTSCHRIFT

(11) **EP 2 835 187 B1**
(45) Veröffentlichungstag und Bekanntmachung des Hinweises auf die Patenterteilung: **12.10.2016**
(21) Anmeldenummer: 14002786.3
(22) Anmeldetag: 08.08.2014
(51) Int. Cl.: B21D 22/02, B21D 22/20

(54) **Verfahren und Vorrichtung zum Herstellen eines pressgehärteten Bauteils**
Method and device for producing a press-hardened component
Procédé et dispositif de fabrication d'un composant durci à la presse

(30) Priorität: 09.08.2013 DE 102013013270
(43) Veröffentlichungstag der Anmeldung: 11.02.2015
(73) Patentinhaber: Fraunhofer-Gesellschaft zur Förderung der angewandten Forschung e.V., 80686 München (DE)
(72) Erfinder: Wolter, Bernd, 66399 Mandelbachtal (DE); Bastuck, Matthias, 66822 Lebach (DE)
(74) Vertreter: Rösler, Uwe

(56) Entgegenhaltungen:
- EP-A2- 2 455 741
- DE-A1-102009 060 388
- DE-A1-102011 111 212
- JP-A- 2010 281 806
- ECKERT W ET AL: "STANZVORGANG ZUVERLASSIG UBERWACHEN. ÖKORPERSCHALL AUSWERTEN - PROZESSSTORUNG ERKENNEN", 1. Januar 1991 (1991-01-01), INDUSTRIE ANZEIGER, LEINFELDEN-ECHTERDINGEN, DE, PAGE(S) 40 - 43, XP000503248, * das ganze Dokument *

## Beschreibung

### Technisches Gebiet

Die Erfindung bezieht sich auf ein Verfahren sowie eine Vorrichtung zum Herstellen eines pressgehärteten Bauteils gemäß dem Oberbegriff des Anspruchs 1 bzw. 10.

Zunächst wird eine, eine härtbare Stahllegierung aufweisende Platine, die optional mit einer Beschichtung versehen sein kann, bereitgestellt, die im Rahmen einer als "direktes Presshärten" bezeichneten Verfahrensvariante, einer Erwärmung, vorzugsweise in einem Ofen, unterzogen wird, bei der sich zumindest ein Teilbereich des Austenit-Ausgangsgefüges der Stahllegierung in Martensit umwandelt. Im Anschluss an den typischerweise als Ofenprozeß bezeichneten Erwärmungsschritt wird die erwärmte Platine in ein Presswerkzeug eingelegt und durch das Schließen des Werkzeugs zu einem Bauteil warmumgeformt. Zur Materialhärtung erfolgt im Anschluss an die Warmumformung im geschlossenen Werkzeug ein thermisches Abschrecken, bei dem das warmumgeformte Bauteil innerhalb des Presswerkzeuges eine rasche Abkühlung erfährt, bei der zumindest in Teilbereichen der Stahllegierung eine die Bauteilhärte optimierende Matensitumwandlung stattfindet.

In einer als "indirektes Presshärten" bezeichneten zweiten Verfahrensvariante erfolgt ein Kaltvorumformen der Platine, d.h. ohne Erwärmen der Platine, zu einem vorumgeformten Bauteil, das im Anschluss erwärmt und in einem Presswerkzeug endgeformt wird. Auch in diesem Fall wird das endgeformte Bauteil thermisch abgeschreckt, wobei das Bauteil, wie auch beim direkten Presshärten innerhalb des Presswerkzeuges eine rasche Abkühlung erfährt.

### Stand der Technik

Presshärten oder auch Formhärten ist ein Verfahren zur Herstellung hochfester metallischer Bauteile, wie Träger- und Verstärkungselemente, die vorzugsweise im Automobilkarosseriebau zur Anwendung kommen, bspw. in Form von Quer- und Längsträgern, B-Säule sowie Tunnel-Verstärkungen, die dem Insassenschutz im Crashfall dienen.

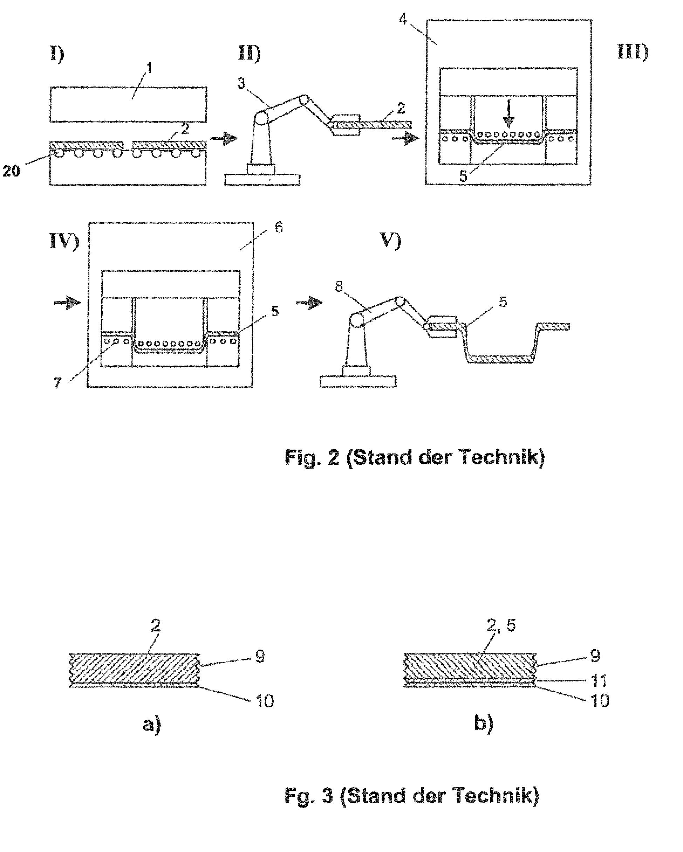

Für das direkte Presshärten eignen sich typischerweise ebene Platinen aus einem härtbaren borlegierten Stahl, bspw. 22 MnB5. Anhand der in Figur 2 illustrierten Sequenzbilddarstellungen sei das Verfahren des direkten Presshärtens näher erläutert. In einem ersten Prozessschritt, der in Sequenzbild I) illustriert ist, gelangen vereinzelte Platinen 2 in einen Ofen 1, der bspw. als Durchlaufofen ausgelegt ist, in dem die vereinzelten Platinen 2 bspw. mittels Transportrollen 20 durch den Ofen 1 bewegt werden. Selbstverständlich sind auch stationäre Öfen im Einsatz, die mit geeigneten Handhabungsmaschinen mit vereinzelten Platinen bestückt und nach entsprechender Ofenzeit entleert werden. Zumeist sind die Platinen 2 beschichtet, wie dies aus Figur 3a hervorgeht, um zum einen eine Verzünderung der Oberfläche beim Aufheizen zu verhindern und zum anderen das entstehende Bauteil vor Korrosion zu schützen. Auf der aus einer härtbaren Stahllegierung als Grundmaterial 9 bestehenden Platine 2 ist eine Schicht 10, typischerweise als AISi-, Zn-, ZnNi-, Zn-Fe-, ZnMg-, ZnCr- oder hybridische Beschichtung, aufgebracht, wobei sich erst während des Aufheizens der Platinen 2 im Ofen 1 eine Diffusionsschicht 11 aus der betreffenden Stahllegierung als Grundmaterial 2 sowie dem Beschichtungsmaterial der Schicht 10 ausbildet, siehe Figur 3b. Würden hingegen die vereinzelten Platinen 2 ohne eine zusätzliche Beschichtung im Rahmen des Ofenprozesses aufgeheizt, so entsteht, sofern der Ofen nicht mit einem Inertgas geflutet ist, Zunder, der nach dem darauf folgenden Prozessschritt des Umformens, der im Weiteren erläutert wird, entfernt werden muss.

Nach Beendigung des Erwärmens im Rahmen des Ofenprozesses I) wird die Platine 2 mittels eines Transferwerkzeuges 3, vorzugsweise in Form eines Handhabungsroboters, aus dem Ofen 1 entnommen und in das Presswerkzeug 4 eingelegt, siehe hierzu den Entnahme- und Transfervorgang II). Die Platine 2 wird nun schnell im Rahmen eines Warmumformvorgangs III) durch das Schließen des Presswerkzeugs zu einem Blechbauteil 5 umgeformt. Da der Umformvorgang bei hohen Werkstofftemperaturen erfolgt, sind die notwendigen Umformkräfte deutlich geringer als bei Raumtemperatur.

Im Anschluss an das Warmumformen III) des Bauteils mit Hilfe des Presswerkzeuges 4 erfolgt bei geschlossenem Presswerkzeug 4 das sog. Abschreckhärten IV), bei dem das innerhalb des Presswerkzeuges 4 gefasste Bauteil 5 mit oder oberhalb einer werkstoffspezifischen kritischen Abkühlrate thermisch abgeschreckt wird. Der thermische Abschreckvorgang erfolgt mit Hilfe innerhalb des Presswerkzeuges 4 bauteilnah angebrachten Kühlkanälen 7, durch die entsprechendes Kühlmittel, zumeist Wasser, geleitet wird. In dem umgeformten Bauteil 5 entsteht auf diese Weise ein hochfestes martensitisches Gefüge, das je nach Temperaturhistorie sowohl während des Aufheizens als auch Abkühlens entweder homogen ausgebildet ist oder partiell weichere Bereiche mit Mischgefügen, umfassend Martensit, Bainit, Ferrit, Perlit, etc. aufweisen kann. Das abgekühlte Bauteil 5, das typischerweise Temperaturen von unter 150°C aufweist, wird im letzten Prozessschritt V) mit Hilfe eines weiteren Transferwerkzeuges 8 aus dem Presswerkzeug 4 entnommen und entsprechenden Folgeprozessen zugeführt.

In Abwandlung zum direkten Presshärten unterscheidet sich das indirekte Presshärten dadurch, dass die Platinen 2 ohne oder ohne nennenswerte Aufheizung, d. h. im "kalten" Zustand, zumindest auf eine Zwischengeometrie, die mehr oder weniger nahe der Endgeometrie ist, vorgeformt. Dies erfolgt mit einem typischen Presswerkzeug, aus dem das kalt vorgeformte Bauteil entnommen und in einen Ofen zu Zwecken der Austenitisierung erwärmt wird. Nachfolgend wird das erwärmte vorgeformte Bauteil in einem entsprechenden Presswerkzeug 4 auf Endgeometrie geformt sowie durch Halten im gekühlten Presswerkzeug abschreckgehärtet.

Trotz der übersichtlichen Prozessabfolge sind die involvierten materialspezifischen Vorgänge innerhalb der Platine bzw. dem Bauteil hochkomplex und sehr sensibel in Bezug auf die vorherrschenden Prozessbedingungen, denen die Platine bzw. das Bauteil ausgesetzt ist. Inwieweit sich bspw. die Diffusionsschicht 11 während des Ofenprozesses auf eine gewünschte Schichtdicke ausbildet und dabei nicht abtropft oder an den Transportrollen innerhalb des Durchlaufofens 1 oder an etwaigen Aufnahmen bei einem stationären Ofen anhaftet, hängt von einer Vielzahl von Einflussfaktoren ab. Gleiches gilt für die im Ofen homogen oder partiell ablaufende Austenitisierung, die wiederum das Ergebnis des anschließenden Abschreckhärtens beeinflusst und somit mitentscheidend ist für die Erreichung der gewünschten mechanisch-technologischen Eigenschaften des Bauteils, wie bspw. Bauteilhärte, Zugfestigkeit etc. Bei dem Prozessschritt des Warmumformens besteht für das Bauteil darüber hinaus die Gefahr, dass sich Mikrorisse in der Beschichtung oder Einschnürungen und Risse innerhalb des Grundmaterials bilden, die das Bauteil unbrauchbar machen. Während des Abschreckhärtens innerhalb des Presswerkzeuges können sich unter ungünstigen Umständen darüber hinaus zumindest lokal ungewünschte Gefügeanteile, wie bspw. weichere Ferrit- und/oder Bainit-Gefüge ausbilden. In diesem Fall ist das Bauteil als Ausschuss zu betrachten, zumal das Bauteil nicht überall über die gewünschten Werkstoffeigenschaften, wie bspw. Härte, Zugfestigkeit etc. verfügt. Ursache für das lokale Auftreten dieser abweichenden Gefügeanteile ist meist eine zu geringe bzw. zu hohe Ausgangstemperatur des Bauteils vor dem Prozess des Abschreckhärtens und/oder eine zu geringe oder zu hohe Abkühlrate während des Prozess des Abschreckhärtens. Ersteres lässt sich wiederum auf eine zu geringe oder zu hohe Bauteiltemperatur bei der Entnahme aus dem Ofen oder auf eine zu starke Abkühlung während der Transferzeit vom Ofen zum Presswerkzeug oder während des Umformprozesses zurückführen. Auch die Ursachen für eine unzureichende Abkühlrate können vielfältig sein. So spielen u. a. die Wärmeabfuhr durch das Kühlmittel, die thermischen Leitfähigkeiten der beschichteten Bauteiloberfläche und des Presswerkzeuges sowie die thermische Kontaktfläche zwischen beiden, die Dicke der Diffusionsschicht sowie der Verschleiß sowie die Andruckkraft des Presswerkzeuges eine große Rolle. Desweiteren ist zu beachten, dass die Ac3-Temperatur, bei der die Austenitisierung der jeweiligen Stahllegierung auftritt, wie auch die kritische Abkühlgeschwindigkeit werkstoffspezifisch sind und somit gewisse Chargenschwankungen aufweisen können.

Da beim Presshärten sicherheitsrelevante Bauteile hergestellt werden, gilt es die Fehlerfreiheit und die Konformität der Werkstoffeigenschaften der Endprodukte unbedingt sicherzustellen. Dies ist oft schwierig zu realisieren, zumal das Presshärten eine Abfolge technologisch aufwendiger, zeit- und temperaturkritischer Prozessschritte darstellt, die exakt aufeinander abgestimmt sein müssen, um ein Produkt mit optimalen Eigenschaften hinsichtlich Form, Oberfläche, Fehlerfreiheit und Werkstoffkenngrößen zu erhalten. Aus der Literatur sind bereits einige Ansätze zur Prozessüberwachung und -regelung sowie zur Qualitätssicherung der Bauteile beim Presshärten bekannt, die nachfolgend kurz skizziert werden.

Zur Beurteilung der Werkstoffeigenschaften sowie auch der Qualität der herstellungsbedingten Beschnittkanten einer Platine, die aus einer als Meterware vorliegenden Lage eines aus einer Stahllegierung bestehenden Bleches separiert ist, steht eine Vielzahl zerstörender und metallographischer Verfahren zur Verfügung. In einem Artikel von Clobes, J. et al, "Strategies for Press Hardening of Products with Tailored Properties" 2nd International Seminar on Hot Sheet Metal Forming of High-Perfomances Steel, Hannover, 14.10.2012 wird das Aufbringen von Thermoelementen auf eine Platine vor dem in Figur 2 erläuterten Prozessablauf beschrieben. Auf diese Weise kann zwar lokal stark eingeschränkt der vollständige Temperaturzyklus vom Aufheizen bis hin zum Abschrecken erfasst werden. Nach dem Aufheizen sowie vor der Warmumformung ermöglichen thermographische Kamerasysteme das Feststellen einer ganzflächigen Temperaturverteilung auf der Platinenoberfläche, wobei lokale Temperaturschwankungen bereits darauf hindeuten, dass das anschließende Presshärten im Wege der Warmumformung und des darauf folgenden Abschreckhärtens inhomogene Materialeigenschaften zur Folge haben wird. Auch die Verwendung taktiler thermischer Sensorelemente innerhalb der für die Überführung der im Ofen erwärmten Platine in das Presswerkzeug erforderlichen Transfervorrichtung zählt zu den bekannten Maßnahmen.

Während der Warmumformung sowie der Abschreckhärtung werden meist Prozessgrößen wie die vorherrschende Prozesstemperatur oder der auf das zu verformende Bauteil wirkende Prozessdruck erfasst. Aus der gattungsbildende DE 10 2011 111 212 A1 geht in diesem Zusammenhang ein Presswerkzeug hervor, in dem ein taktil arbeitender Temperatursensor integriert ist. Ein vergleichbar taktil arbeitender Temperatursensor, der gleichfalls innerhalb eines Presswerkzeuges integriert ist, ist in der Druckschrift EP 2 500 112 A1 beschrieben. Eine Möglichkeit zur Einflussnahme auf eine exakte Temperierung sowie auch der Abkühlrate während des Abschreckhärtens ist in der Druckschrift EP 2 289 694 B1 beschrieben, in der eine Überwachung der Temperatur des Kühlwassers, das durch die innerhalb des Presswerkzeuges verlaufenden Kühlkanäle strömt, erläutert wird.

Unmittelbar nach dem Presshärten wird die Temperaturverteilung auf der Bauteiloberfläche thermographisch erfasst, um Bauteilpositionen mit den lokal erhöhten Temperaturen zu detektieren, da ganz offensichtlich diese Bereiche eine zu geringe Abkühlung erfahren haben, so dass die Bauteilhärte in diesem Bereichen lokal herabgesetzt ist. In der Druckschrift DE 10 2010 049 802 A1 gehen in diesem Zusammenhang ein Verfahren sowie eine Vorrichtung zur Bestimmung der Härte eine pressgehärteten Bauteils hervor, bei dem die Temperaturverteilung auf der Bauteiloberfläche mit Hilfe taktiler Sensoren abgerastert wird. In der Druckschrift EP 2 455 741 A2 wird der Einsatz einer Infrarotkamera beschrieben, mit der die Aufnahme einer gesamtflächigen Temperaturverteilung auf dem pressgehärteten Bauteil im unmittelbarem Anschluss an das Abschreckhärten vorgenommen werden kann, wodurch die Rückschlüsse auf Abweichungen zwischen Ist- und Soll-Werten der Bauteilhärte gezogen werden können. In der DE 10 2009 060 388 A1 ist ein mehrstufiges direktes Formhärten eines aus härtbaren Stahl bestehenden Blechteils beschrieben, das bei einer gewünscht konstant vorgegebene Temperatur umgeformt wird. Hierzu sind in den Preßwerkzeugen geeigneten Temperatursensoren integriert, deren Sensorsignale einer Temperaturkonstantregelung dienen.

Typischerweise werden die Eigenschaften eines pressgehärteten Bauteils in Bezug auf Fehlerfreiheit, Werkstoffeigenschaften, vorhandene Beschichtungen etc. auf Basis stichprobenartiger Prüfungen im Rahmen der klassischen statistischen Prozesslenkung überwacht. Hierfür werden üblicherweise zerstörende Prüfverfahren, wie Zugversuch, Härteprüfung und Metallographie eingesetzt, siehe bspw. Kurz, T. et al, "Crashperformance und Duktilität von pressgehärteten Stählen reicht der Zugversuch zur Beschreibung?", Tagungsband 4; Erlanger Workshop Warmblechumformung, 2009, Seite 107.

Ferner geht aus einem Beitrag von Wolter, B., et al, "Zerstörungsfreie Prüfung pressgehärteter Karosserieteile mit 3MA", DGZFP-Jahrestageung 2013, Dresden, 07.05.2013, die stichprobenartige Prüfung von Qualitätsmerkmalen eines pressgehärteten Bauteils mittels mikromagnetischer Prüfverfahren hervor. Die Signale liefern Messinformationen über die Mikrostruktur des Werkstoffes und erlauben quantitative Aussagen über dessen mechanisch-technologischen Eigenschaften. In diesem Zusammenhang sei insbesondere die 3MA-Prüftechnik (Mikromagnetische Multi-parametrische Mikrostruktur- und Spannungs-Analyse) genannt, die eine Kombination mehrerer mikromagnetischer Prüfmethoden darstellt, mit der die Erfassung des Barkhausen-Rauschens, der Oberwellenanalyse, der tangentialen magnetischen Feldstärke, der Überlagerungspermeabilität sowie des Mehrfrequens-Wirbelstromes möglich ist. In diesem Zusammenhang sei ferner auf folgende Veröffentlichungen verwiesen: Dobmann, G. Altpeter, I., Wolter, B. Kern, R. "Industrial Applications of 3MA - Micromagnetic Multiparameter Microstructure and Stress Analysis", Romanian Welding Society, 5th International Conference Structural Integrity of Welded Structures, ISCS 2007, Timisoara, 2008 sowie Altpeter, I., Kopp, M, Kröning, M., Milch, M., Schaffner, C., Behrens, B.-A., "Influences on the part quality in conventional deep drawing process", Proc. 9th European Converence on NDT, ECNDT Berlin 2006, DGZfP Proceedings BB 103. Insbesondere aus der letztgenannten Druckschrift geht die Anwendung der 3MA-Prüftechnik für die Prüfung von Eigen- und Last-Spannungen und -Dehnungen hervor.

Darüber hinaus ist es bekannt, zur Fehlerprüfung von Bauteilen aus Stahlblech elektromagnetische Ultraschall-Wandler, kurz EMUS-Wandler einzusetzen, mit denen beispielsweise die Anregung von Plattenwellen innerhalb kalt geformter Blechbauteile möglich ist, wie dies aus dem Beitrag von Wolter, B., Bastuck, M., Conrad, C., Herrmann, H.-G., Kern, R. Valeske, B. "Nondestructive Testing for Quality Assurance and Process Control of Presshardened Steel", 2nd International Seminar on Hot Sheet Metal Forming of High-Perfomance Steel, Hannover, 25.12.2012.

Beim Presshärten können die beschriebenen fertigungsbegleitenden, stichprobenartig vorgenommenen Prüfungen in Bezug auf die Produkteigenschaften der presszuhärteten oder pressgehärteten Bauteile aus Zeit- sowie auch aus Kostengründen immer nur in begrenztem Umfang durchgeführt werden. Werden jedoch nicht alle Bauteile geprüft, besteht immer die Gefahr, dass Bauteile mit nichtkonformen Qualitätsmerkmalen unerkannt bleiben. Die bisher bekannte und angewandte fertigungsbegleitende, off-line-Prüfung, führt systembedingt stets zu einem Zeitversatz zwischen der Herstellung und der Prüfung eines jeweiligen pressgehärteten Bauteils. Wird ein fehlerhaftes Bauteil identifiziert, so kann dennoch nicht ausgeschlossen werden, dass zuvor produzierte Bauteile ebenfalls bereits fehlerhaft waren. Zur Sicherheit werden in einem derartigen Fall ganze Produktchargen als fehlerhaft angenommen und verschrottet und dies eventuell ohne weitere Kenntnis in unnötiger Weise. Prozessstörungen, die innerhalb der einzelnen Prozessschritte des Presshärtens auftreten und somit zu fehlerhaften Bauteilen führen können, können im Wege der off-line-Prüfung nicht erkannt und daher kann nicht sofort gegengesteuert werden. Als besonders störend erweist sich der Zeitversatz zwischen der Herstellung und Prüfung bei der Bemusterung zur Produktionsprozess- und Produktfreigabe, zumal erst im Anschluss an die Prüfung eine Freigabe erfolgen kann, deren Vorliegen die Voraussetzung für die Aufnahme der Serienproduktion ist. Bei der off-line-Prüfung erfolgt die Prüfung zumeist erst am Endprodukt, d. h. am pressgehärteten Bauteil. War bereits das Zwischenprodukt fehlerhaft, so wird dies durch die Prüfung am Endprodukt nicht erkannt, weshalb die unnötige weitere Wertschöpfung nach Vorliegen eines Ausschussteils auf diese Weise nicht vermieden werden kann.

### Darstellung der Erfindung

Der Erfindung liegt die Aufgabe zugrunde ein Verfahren sowie eine Vorrichtung zum Herstellen eines pressgehärteten Bauteils, das entweder im Wege des direkten oder indirekten Presshärtens hergestellt wird, derart weiterzubilden, so dass eine weitgehend lückenlose Überprüfung der Bauteilqualität bereits während des gesamten Vorganges des Presshärtens möglich wird. Durch die lückenlose Qualitätsüberprüfung soll zum einen die Ausschussrate von presszuhärtenden Bauteilen reduziert sowie der Qualitätsnachweis derartiger Bauteilen verbessert werden.

Die Lösung der der Erfindung zugrunde liegenden Aufgabe ist im Anspruch 1 angegeben. Eine erfindungsgemäße Vorrichtung zum Presshärten ist Gegenstand des Anspruches 10. Den Erfindungsgedanken in vorteilhafter Weise weiterbildende Merkmale sind Gegenstand der Unteransprüche sowie der weiteren Beschreibung unter Bezugnahme auf die Ausführungsbeispiele zu entnehmen.

Die der Erfindung zugrunde liegende Idee geht von einer fertigungsintegrierten sensoriellen Überwachung des presszuhärtenden bzw. pressgehärteten Bauteils aus, wobei ein gesamtheitliches Konzept zur Erfassung und Überwachung der sich während des Vorgangs des Presshärtens ergebenden bzw. sich einstellenden Werkstoffzustände und Werkstoffeigenschaften des Bauteils und sich davon ableitende Qualitätsmerkmale verfolgt wird. Die sensorielle Erfassung, die mittels elektromagnetischer und/oder schallakustischer Sensoren durchgeführt wird, vermag von dem jeweiligen Bauteil Zustandsgrößen zu generieren, die einer qualitativen Beurteilung zugrunde gelegt werden und nicht nur der Qualitätsüberwachung, sondern darüber hinaus auch der aktiven Ineingriffnahme auf den jeweiligen Prozessschritt dienen, dem das Bauteil ausgesetzt ist. Hierzu werden die den jeweiligen Prozessschritt bestimmenden Prozessparameter im Rahmen einer geeigneten Regelung oder Steuerung beeinflusst.

Das lösungsgemäße Verfahren zur Herstellung eines pressgehärteten Bauteils umfasst in an sich bekannter Weise wenigstens folgende, jeweils mittel- oder unmittelbar aufeinander abfolgende Prozessschritte:

In einem ersten Prozessschritt a) wird eine eine härtbare Stahllegierung aufweisende Platine bereitgestellt, die mittels an sich bekannter Separationstechniken von einer als Meterware vorliegenden Blechlage aus einer Stahllegierung, bspw. im Wege eines Stanz- oder Schneidprozesses, separiert wird. Die Platine wird vorzugsweise wenigstens einseitig beschichtet, wie dies vorstehend in Verbindung mit den Figuren 3a, 3b erläutert worden ist.

Im Rahmen des direkten Presshärtens wird die Platine vorzugsweise in einem Ofenprozess gemäß Prozessschritt b1) erwärmt und nachfolgend im Rahmen des Prozessschrittes c1) in einem Presswerkzeug durch das Schließen des Presswerkzeugs zu einem warmumgeformten Bauteil geformt. Das warmumgeformte Bauteil erfährt im unmittelbaren Anschluss an das Warmumformen noch innerhalb des geschlossenen Presswerkzeuges eine Abkühlung d1), durch die das warmumgeformte Bauteil thermisch abgeschreckt wird, wodurch sich das pressgehärtete Bauteil ausbildet.

Alternativ zu dem vorstehend erläuterten, direkten Presshärten, ist es gleichsam möglich, die bereitgestellte Platine gemäß Schritt a) ohne eine vorherige Erwärmung der Platine vorumzuformen, im Wege eines alternativen Prozessschrittes b2), häufig wird dieser Prozessschritt auch als "Kaltumformen" bezeichnet. Nach Erhalt des sog. kalt-vorumgeformten Bauteils wird dieses vorzugsweise in einem Ofenprozess c2) erwärmt und im Anschluss daran mit Hilfe eines Presswerkzeuges in die Endgeometrie warmumgeformt, gemäß dem Prozessschritt d2). Abschließend wird das warmumgeformte Bauteil im geschlossenen Presswerkzeug thermisch abgeschreckt zum Erhalt des letztlich pressgehärteten Bauteils gemäß Prozessschritt e2).

Gleichgültig, ob es sich um das direkte oder indirekte Presshärten eines Bauteils handelt, können die vorstehend erläuterten einzelnen Prozessschritte die betreffende Platine bzw. das betreffende Bauteil gesamtheitlich oder nur in Teilbereichen betreffen, d. h. dass die Verfahrensschritte des Erwärmens gemäß Prozessschritt b1) bzw. c2) jeweils auf die gesamte Platine oder wenigstens nur einen Teilbereich der Platine angewendet wird. Im Falles des Warmumformens gemäß der Prozessschritte c1) und d2) kann jeweils das gesamte vorumgeformte Bauteil oder wenigstens lediglich ein Teilbereich des vorumgeformten Bauteils warmumgeformt werden. Das gleiche betrifft auch den Prozessschritt des Abschreckhärtens gemäß d1) und e2) bei dem jeweils das gesamte warmumgeformte Bauteil oder wenigstens nur ein Teilbereich des warmumgeformten Bauteils einer gezielten thermischen Abschreckung unterworfen wird.

Zur einfachen weiteren Erläuterung des lösungsgemäßen Verfahrens sei angenommen, dass jeweils die Platine bzw. das jeweils betreffende Bauteil in seiner gesamten räumlichen Ausbildung von dem jeweiligen Prozessschritt umfasst wird.

Lösungsgemäß wird vorgeschlagen, die Platine zumindest während des Prozessschrittes des Erwärmens b1) bzw. Kaltumformens b2), das sich aus der Platine ausbildende Bauteil während der Prozessschritte des Warmumformens c1), Abschreckhärtens d1) bzw. Erwärmens des kaltvorumgeformten Bauteils c2) bis Abschreckhärten e2) jeweils elektromagnetisch und/oder schallakustisch sensorisch, d. h. mit Hilfe eines zerstörungsfreien Prüfverfahrens, zum Erhalt von der Platine sowie dem sich aus der Platine ausbildenden Bauteil zuordenbaren Zustandsgrößen kontinuierlich zu prüfen. In besonders vorteilhafter Weise erfolgt die sensorische Überprüfung zusätzlich auch vor und unmittelbar nach den einzelnen Prozessschritten. Die elektromagnetisch und/oder schallakustisch sensorisch erhaltenen Zustandsgrößen werden während des Prozesses jeweils einer toleranzbelegten Bewertung unterzogen, bei der im Falle wenigstens einer während eines bestimmten Prozessschrittes erfassten, eine vorgegebene Toleranz überschreitenden Zustandsgröße ein Steuer- oder Regelsignal generiert wird, das Einfluss auf wenigstens einen zumindest den bestimmten Prozessschritt charakterisierenden Prozessparameter nimmt oder die betreffende Platine oder das betreffende Bauteil von der weiteren Abfolge der Prozessschritte ausschleust.

Um die presszuhärtende Platine bzw. das sich aus ihr ausbildende presszuhärtende Bauteil zum einen ganzheitlich in seiner geometrischen Ausbildung sowie auch kontinuierlich, d. h. unterbrechungsfrei vom Anfang der Prozessschrittabfolge bis hin zum Erhalt des pressgehärteten Bauteils einer sensorischen Prüfung zu unterziehen, um zu jedem Zeitpunkt der Prozessschrittabfolge Kenntnis über die physikalischen, geometrischen sowie auch die sich daraus ergebenden Qualitätseigenschaften der Platine bzw. des sich daraus ergebenden Bauteils zu erhalten, bedarf es der Integration von elektromagnetischer und/oder schallakustischer Sensoren in die, die einzelnen Prozessschritte bestimmenden Werkzeuge, so insbesondere des für die Erwärmung der Platine bzw. des kaltvorgeformten Bauteils erforderlichen Ofens, des im Rahmen des indirekten Presshärtens erforderlichen Presswerkzeugs zur Kaltumformung der Platine sowie des Presswerkzeuges zur Realisierung der Warmumformung sowie der Abschreckhärtung, bei der das warmumgeformte Bauteil innerhalb des Presswerkzeuges verbleibt.

So gilt es vorzugsweise mit Hilfe der in den jeweiligen Werkzeugen zu integrierende Sensorik die elektrischen, magnetischen und schallakustischen Eigenschaften der Platine sowie des sich aus der Platine ausbildenden Bauteils mit den Mitteln, bzw. unter Maßgabe einer zerstörungsfreien Prüfung zu erfassen, d. h. die sensorische Prüfung erfolgt in Bezug auf die zu überprüfende Platine bzw. in Bezug auf das zu prüfende Bauteil degradationsfrei.

Als zu integrierende Sensoren in die vorstehend geschilderten Werkzeuge, die vorzugsweise auch die Transferwerkzeuge mit umfassen, mit denen sowohl die Bestückung als auch die Entnahme und Übergabe der Platine bzw. des jeweiligen Bauteils von einem Werkzeug ins andere Werkzeug vorgenommen wird, eignen sich elektromagnetische sowie auch schallakustische Sensoren. Insbesondere vermögen elektromagnetische Sensoren, wie die erwähnten 3MA-Sensoren kontaktfrei die folgenden elektromagnetischen Eigenschaften der Platine und/oder des jeweiligen Bauteils zu erfassen: Barkhausenrauschen, Oberwellen einer Tangentialen an einer Oberfläche der Platine oder des Bauteils vorherrschenden magnetischen Feldstärke, Überlagerungspermeabilität sowie Mehrfrequenz-Wirbelströme. Zur Untersuchung von schallakustischen Eigenschaften eignen sich insbesondere EMUS-Sensoren, mit denen Schalllaufzeiten, Schallschwächungen sowie aber auch aus der Platine oder dem Bauteil austretende Schallemissionen erfassbar sind.

Da der prinzipielle Aufbau eines elektromagnetischen Ultraschallwandlers, kurz EMUS-Wandler und eines an sich bekannten 3MA-Sensors sehr ähnlich sind, zumal beide Techniken auf elektromagnetischen Wechselwirkungen mit dem zu untersuchenden Bauteil beruhen, eignet sich in einer besonders bevorzugten Ausführungsform des lösungsgemäßen Verfahrens sowie der nachstehend zu beschreibenden lösungsgemäßen Vorrichtung der Einsatz eines sogenannten Hybridsensors, der beide Messtechniken und die jeweils mit diesen erfassbaren Prüfgrößen miteinander kombiniert. Der Hauptbestandteil eines derartigen Hybridsensors besteht aus einem Elektromagnet als Magnetisierungseinrichtung, die in der Platine bzw. innerhalb des Bauteils ein statisches oder quasi statisches, parallel zur Oberfläche orientiertes Magnetfeld induziert, sowie ein Hochfrequenz-Spulensystem. Das Hochfrequenz-Spulensystem beinhaltet eine Sende- bzw. Empfangsspule für die elektromagnetische Ultraschallwandlung sowie eine separate Spule für die Wirbelstrom- und Überlagerungspermeabilitätsmessung als Teil des sog. 3MA-Verfahrens. Darüber hinaus ist eine Aussparung zur Befestigung einer Hallsonde vorgesehen, die zur Messung der magnetischen Tangentialfeldstärke im 3MA-Verfahren erforderlich ist. Auf Basis eines derart konzipierten Hybridsensors lässt sich eine Vielzahl von die Platine bzw. das Bauteil während der jeweiligen Prozessschritte charakterisierenden Zustandsgrößen quantitativ messtechnisch erfassen, die eine Aussage über die Qualitätseigenschaften der Platine bzw. des Bauteils erlauben: So können genaue Angaben über die aktuellen Werkstoffeigenschaften der härtbaren Stahllegierung in Bezug auf ihre Härte, Zugfestigkeit, Streckgrenze, Bruchdehnung sowie Gleichmaßdehnung erhalten werden. Geometriegrößen von der Platine sowie dem Bauteil hinsichtlich Dicken- und/oder Längendimensionen können im Wege der schallakustischen Untersuchung ermittelt werden. Darüber hinaus ist es möglich, Schichtdicken wenigstens einer auf der Platine oder dem Bauteil aufgebrachten Materialschicht oder einer sich im Wege der Prozessschritte ausbildenden Materialschicht quantitativ zu erfassen. Sowohl der Grad der Austenitisierung als auch der Martensitbildung innerhalb der Stahllegierung kann in Abhängigkeit der jeweils vorherrschenden Prozesstemperatur, sei es im Wege des Erwärmens oder des thermischen Abschreckens bestimmt werden. Gleichsam sind auch Aussagen über mechanische Spannungen und Dehnungen innerhalb der Stahllegierung möglich. Ferner ist die messtechnische Erfassung der elektrischen sowie auch thermischen Leitfähigkeit der Stahllegierung sowie auch der thermischen Leitfähigkeit einer optional auf der Platine oder dem Bauteil aufgebrachten Materialschicht oder einer sich im Wege der Prozessschritte ausbildenden Materialschicht möglich. Sowohl die Temperatur der Stahllegierung als auch die Temperaturen zu Beginn und am Ende einer sich in der Stahllegierung ausbildenden Martensitumwandlung sind exakt bestimmbar.

Auf Basis der vorstehenden messtechnisch erfassbaren quantitativen Zustandsgrößen ist eine qualitative Beurteilung der jeweils aktuellen Platinen- bzw. Bauteilqualität durch eine toleranzbelegte Bewertung möglich, bei der festgestellt wird, ob wenigstens eine der messtechnisch erfassten Zustandsgrößen eine vorgegebene Toleranz überschreitet oder nicht. Sollte eine entsprechende Toleranzüberschreitung vorliegen, so entspricht die Platinen- bzw. Bauteilqualität nicht den vorgegebenen Qualitätsanforderungen. In diesem Fall werden Regelsignale generiert, mit denen Einfluss auf die jeweils aktuell vorherrschenden Prozessbedingungen genommen wird, denen die Platine bzw. das Bauteil in dem jeweiligen Prozessschritt unterliegt, gemäß dem so genannten "Feedback Control". Werden bspw. im Prozessschritt der Erwärmung in einem Teilbereich der zu erwärmenden Platine bzw. des vorumgeformten Bauteils Temperaturen erfasst, die über einer vorgegebenen Solltemperatur liegen, so werden Regelsignale generiert, durch die die Ofentemperatur in geeigneter Weise herabgesetzt wird. Wird im Falle der Warmumformung zumindest in einem Teilbereich eine zu große Bauteilwanddicke sensorisch festgestellt, so wird der Pressdruck innerhalb des Presswerkzeuges in geeigneter Weise vergrößert. Überschreitet hingegen eine bestimmte sensorisch erfasste Zustandsgröße einen vorher festgelegten erweiterten Toleranzbereich, bei dessen Überschreitung durch regulative Einflussnahme auf den jeweils vorherrschenden Prozessschritt keine erwünschte Korrektur und Rückführung der Qualitätseigenschaften der Platine bzw. des Bauteils innerhalb eines tolerablen Qualitätsbereiches möglich ist, so gilt es die geprüfte Platine bzw. das geprüfte Bauteil von der weiteren Abfolge der Prozessschritte auszuschleusen.

Wird hingegen nach Beendigung, bspw. des Erwärmens der Platine bzw. des vorgeformten Bauteils oder des Warmumformens mit Hilfe des Presswerkzeuges festgestellt, dass wenigstens eine Zustandsgröße außerhalb eines vorgegebenen Toleranzbereiches liegt, so wird ein Steuersignal generiert, mit dem Einfluss auf den nächstfolgenden Prozessschritt genommen wird, im Bestreben, die Bauteilqualität des presszuhärtenden Bauteils im folgenden Prozessschritt zu optimieren. Wird bspw. bereits zu Beginn des Presshärteverfahrens unmittelbar nach Bereitstellen der Platine und vor Beginn des vorstehend bezeichneten Prozessschrittes b1) oder b2) d. h. das Erwärmen der Platine oder das entsprechenden Kaltvorumformen der Platine, durch sensorische Prüfung festgestellt, dass wenigstens eine der Platine zuordenbare Zustandsgröße bei der toleranzbelegten Bewertung außerhalb eines vorgegebenen Toleranzbereiches liegt, jedoch noch innerhalb eines erweiterten Toleranzbereiches, der ein Ausschleusen der geprüften Platine aus der Abfolge der Prozessschritte nicht erforderlich macht, so wird ein Steuersignal generiert, das Einfluss auf zumindest den unmittelbar vorstehenden Prozessschritt des Erwärmens der Platine gemäß Prozessschritt b1) bzw. des Kaltumformens der Platine gemäß Prozessschritt b2) derart nimmt, so dass die den Prozessschritt betreffenden Prozessparameter in geeigneter Weise vorab justiert werden. Insbesondere betrifft dies die Temperaturvorgabe sowie auch Verweilzeit der zu erwärmenden Platine bzw. des zu erwärmenden Bauteils innerhalb des Ofens, um auf diese Weise Einfluss auf den Austenitisierungsgrad, die Temperaturverteilung sowie ggf. den Schichtaufbau bzw. den sich ausbildenden Schichtaufbau während des Erwärmens zu nehmen.

In vorteilhafter Weise wird die im Rahmen des Ofenprozesses gemäß Prozessschritt b1) erwärmte Platine bzw. das gemäß Prozessschritt c2) erwärmte, vorumgeformte Bauteil mit Hilfe eines Transferwerkzeuges aus dem Ofen entnommen und in das Presswerkzeug überführt, wobei während des Überführens die Platine bzw. das Bauteil sensorisch zum Erhalt von der Platine oder dem Bauteil zuordenbaren Zustandsgrößen sensorisch geprüft wird. Hierzu ist in dem Transferwerkzeug eine speziell ausgebildete Sensorik integriert, bspw. durch Vorsehen einer Vielzahl der vorstehend skizzierten Hybridsensoren. Während der Überführung kann auf diese Weise der Martensitisierungsgrad, die Temperaturverteilung, mechanische Spannungen, Dehnungen sowie Einschnürungen, aber auch die Ausbildung von Rissen gesamtheitlich sowie auch ortsaufgelöst detektiert werden. Die mit Hilfe der integrierten Hybridsensoren gewonnenen der Platine bzw. dem Bauteil zuordenbaren Zustandsgrößen werden während der Überführung einer toleranzbelegten Bewertung unterzogen, wobei festgestellt wird, ob wenigstens eine Zustandsgröße eine vorgebbare Toleranz überschreitet. Im Falle einer Toleranzüberschreitung wird ein Steuersignal generiert, das Einfluss auf wenigstens einen zumindest die Prozessschritte des Warmumformens gemäß c1) bzw. c2) bzw. des Abschreckhärtens gemäß b1) bzw. e2) charakterisierenden Prozessparameter nimmt, gemäß einem "Feedforward Control". Beispielsweise vermag das Steuersignal im Rahmen des Umformvorganges die Presskraft, die Pressgeschwindigkeit sowie auch die Haltezeit innerhalb des Presswerkzeuges vorab zu beeinflussen. Gleichfalls ist es möglich, dass das vorstehend beschriebene Steuersignal Einfluss auf den Abschreckvorgang gemäß der Prozessschritte b1) bzw. e2) nimmt, indem die Abkühlrate bestimmende Stellgrößen des Kühlmittelkreislaufes beeinflusst werden. Sollte sich doch herausstellen, dass die Toleranzabweichung wenigstens einer Zustandsgröße zu groß ist, so vermag das Transferwerkzeug das aus dem Ofen entnommene vorgewärmte Bauteil bzw. die Platine aus dem weiteren Prozessablauf auszuschleusen.

In der gleichen Weise, in der das Überführen der Platine bzw. des Bauteils vom Ofen in das Presswerkzeug mit Hilfe eines mit Sensoren bestückten Transferwerkzeuges realisiert wird, ist auch ein Transferwerkzeug vorgesehen, das das abschreckgehärtete Bauteil aus dem Presswerkzeug entnimmt und einer weiteren Verwendung bzw. Bearbeitung zuführt. Während der Entnahme und Zuführung wird das pressgehärtete Bauteil gleichfalls sensorisch zum Erhalt von dem Bauteil zuordenbaren Zustandsgrößen geprüft, die, wie vorstehend beschriebenen, einer toleranzbelegten Bewertung unterzogen werden. Sollte sich bei dieser Bewertung herausstellen, dass wenigstens eine Zustandsgröße die vorgegebene Toleranz überschreitet, so wird gleichsam ein Steuersignal generiert, das Einfluss zumindest auf den unmittelbar vorhergehenden Prozessschritt des Abschreckhärtens betreffend der Prozessierung eines nachfolgenden Bauteils nimmt. Sollte eine Nachbearbeitung des geprüften abschreckgehärteten Bauteils nicht möglich sein, um den geforderten Qualitätsansprüchen an das pressgehärtete Bauteil zu entsprechen, so wird das entsprechend geprüfte pressgehärtete Bauteil von einer weiteren Verwendung oder Prozessabfolge ausgeschleust.

In allen Fällen, in denen Steuer- und Regelsignale zur Beeinflussung der die einzelnen Prozessschritte bestimmenden Prozessparameter generiert werden, erfolgt dies unter der Maßgabe der Optimierung einer dem presszuhärtenden Bauteil zuordenbaren Bauteilqualität. Im Falle der Generierung von Regelsignalen gilt es jene Prozessparameter eines Prozessschrittes zu justieren bzw. nachzustellen, dem die Platine oder das entsprechende Bauteil insitu, d. h. gerade an Ort und Stelle, unterliegt, gemäß dem Feedback Prinzip. Werden hingegen Steuersignale generiert, so beeinflussen diese jene Prozessparameter eines Prozessschrittes, dem die Platine oder das Bauteil in der Prozessabfolge als nächsten Prozessschritt zugeführt wird. Gleichsam ist es möglich, mit Hilfe generierter Steuersignale auch jene Prozessparameter eines Prozessschrittes zu beeinflussen, dem eine in der Prozessabfolge nachfolgende Platine oder Bauteil unterliegt.

Das vorstehend erläuterte lösungsgemäße Verfahren zum Presshärten einer eine härtbare Stahllegierung aufweisenden Platine zur Herstellung eines pressgehärteten Bauteiles ist mit einer Vorrichtung realisierbar, die über einen Ofen, ein Presswerkzeug sowie über eine Abkühleinheit verfügt, wobei sich die Vorrichtung lösungsgemäß dadurch auszeichnet, dass in dem Ofen sowie in dem Presswerkzeug jeweils eine elektromagnetische und/oder schallakustische Sensorik integriert ist, die kontinuierlich Sensorsignale generiert, die mittel- oder unmittelbar von einer in dem Ofen und/oder dem Presswerkzeug befindlichen Platine oder einem im Ofen und/oder im Presswerkzeug befindlichen Bauteil herrühren. Die kontinuierlich generierten Sensorsignale werden an eine Auswerte- und Steuereinheit kabelgebunden oder kabellos übertragen, die die Sensorsignale unter Vorgabe wenigstens eines Toleranzmaßes bzw. einer Toleranzbedingung auswertet und im Falle eines Nichtentsprechens der wenigstens einen Toleranzbedingung wenigstens ein Regel- und/oder Steuersignal generiert. Ferner ist eine Kontrolleinheit vorgesehen, die die Betriebsparameter für den Betrieb des Ofens sowie des Presswerkzeuges vorgibt und überwacht und an die das wenigstens eine Regel- und/oder Steuersignal zur Beeinflussung der Betriebsparameter übertragbar ist.

Neben dem Vorsehen separater elektromagnetischer sowie schallakustischer Sensoren zumindest innerhalb des Ofens und dem Presswerkzeug sieht eine besonders bevorzugte Ausführungsform der Vorrichtung den Einsatz von Hybridsensoren vor, die aufgrund ihrer kompakten und platzsparenden Bauform besonders für die Integration in den Ofen sowie des Presswerkzeuges geeignet sind. Zur Vermeidung von Überhitzungen sind die Sensoren möglichst in unmittelbarer Nähe zu den Ofen sowie das Presswerkzeug oberflächennah durchsetzenden Kühlkanälen angeordnet, durch die eine gezielte Temperierung des jeweiligen Werkzeuges aber insbesondere eine Kühlung der Hybridsensoren ermöglicht wird.

Das lösungsgemäße Verfahren insbesondere die zur Realisierung des Verfahrens lösungsgemäß ausgebildete Vorrichtung wird im Weiteren unter Bezugnahme auf bevorzugte illustrierte Ausführungsbeispiele erläutert.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a, b, c,: Darstellung von Applikation und Wechselwirkungsbereich eines Hybridsensors an eine Platine,
- Fig. 2: Darstellung eines schematischen Prozessablaufes beim direkten Presshärten gemäß Stand der Technik,
- Fig. 3a, b: Darstellung des Schichtaufbaus einer Platine sowie einem vorgewärmten Bauteils,
- Fig. 4: Ofendarstellung mit integrierten Sensoren,
- Fig. 5: Darstellung eines Transferwerkzeuges mit Sensoren,
- Fig. 6a, b: Darstellung eines Presswerkzeuges mit integrierten Sensoren zur Warmumformung sowie zur Überwachung des Abschreckhärtens sowie
- Fig. 7a, b: Darstellung eines Transferwerkzeuges mit integrierten Sensoren zur Entnahme des pressgehärteten Bauteils aus dem Presswerkzeug.

### Wege zur Ausführung der Erfindung, gewerbliche Verwendbarkeit

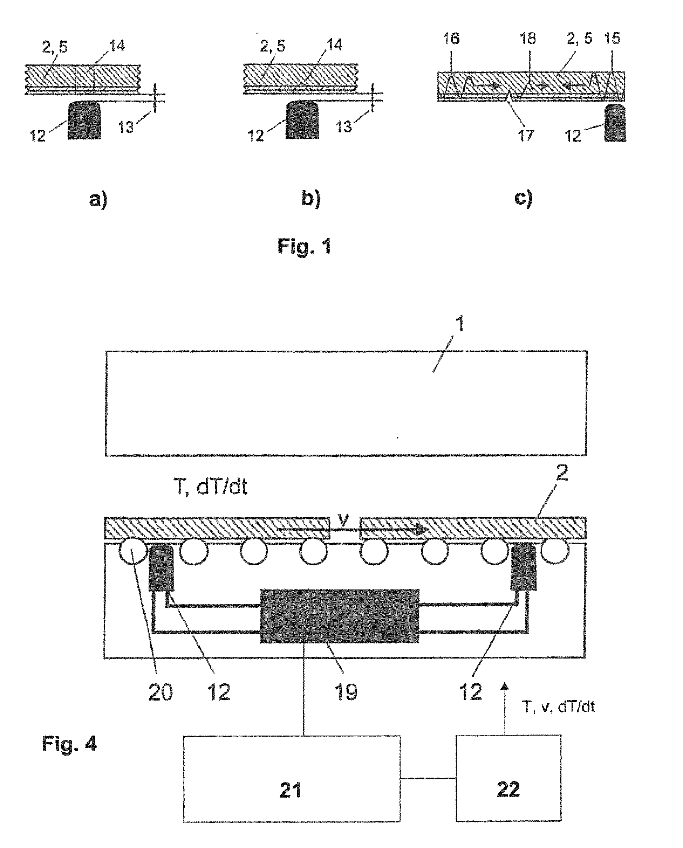

Die Figuren 1a bis c zeigen die Applikation sowie den Wechselwirkungsbereich eines Hybridsensors 12 an einer aus einer härtbaren Stahllegierung bestehenden Platine 2 bzw. eines entsprechenden Bauteiles 5. Der Hybridsensor 12 vereint die zerstörungsfreien Prüfverfahren, nämlich die auf elektromagnetischen Wechselwirkungen beruhende 3MA-Prüftechnik (Mikromagnetische Multiparametrische Mikrostruktur- und Spannungs-Analyse) mit der EMUS-Prüftechnik zur Erzeugung sowie Detektion elektromagnetisch erzeugter Ultraschallwellen. Da der Hybridsensor 12 kompakt und kleinbauend realisierbar ist, eignet er sich in besonderer Weise für eine möglichst platinen- bzw. bauteilnahen Integration in den Ofen, das Presswerkzeug sowie in die Transferwerkzeuge zur Realisierung des Presshärteverfahrens, wie dies aus den Figuren 4 ff. im Weiteren zu entnehmen ist.

Der Hybridsensor 12 ist möglichst nah an einer Seite der Platine 2 bzw. des Bauteils 5 zu applizieren. Da die elektromagnetischen Wechselwirkungen des Hybridsensors mit dem Bauteil 5 auch über einen Luftspalt wirken, kann die Messung mit einer kleinen Abhebung 13 von wenigen Millimetern zwischen Sensor 12 und Bauteil 5 durchgeführt werden. Dies hat den Vorteil, dass der Hybridsensor 12 weder verschlissen noch die Platine 2 bzw. das Bauteil 5 beschädigt werden.

Im mikromagnetischen Modus des Hybridsensors ist der Wechselwirkungsbereich 14 innerhalb der Platine bzw. des Bauteils auf wenige Quadratmillimeter beschränkt, wie dies aus den Figuren 1 a und b zu entnehmen ist. Figur 4c zeigt hingegen den EMUS-Messmodus, bei dem Plattenwellen 15 innerhalb der Platine 2 bzw. dem Bauteil 5 erzeugt werden, die bis zur linken Kante der Platine 2 bzw. des Bauteils 5 laufen und dort reflektiert werden, siehe Bezugszeichen 16. Im sog. A-Bild des Ultraschallsignals, das die zeitaufgelöste empfangene Ultraschallamplitude darstellt, bildet sich das Kantenecho am Ort der Reflexion 16 deutlich aus. Mit Hilfe der Zeitdifferenz zwischen dem Einkoppelsignal 15 sowie dem Kantenecho 16 kann auf die Schallgeschwindigkeit der Ultraschallwelle innerhalb des Werkstoffes geschlossen werden. Befindet sich eine Unregelmäßigkeit 17, bspw. in Form eines Oberflächenrisses innerhalb des Laufweges der Ultraschallwelle 15, so werden Teile der Ultraschallwellen reflektiert, siehe Bezugszeichen 18, die im A-Bild des empfangenen Ultraschallsignals ein Fehlerecho wiedergeben.

Auch sind die Wechselwirkungstiefen beider Messmodi unterschiedlich. Im Falle des mikromagnetischen Prüfverfahrens kann die Wechselwirkungstiefe 14 individuell eingestellt werden, d. h. entweder die gesamte Blechdicke, wie im Falle der Figur 1 a oder nur oberflächennahe Beschichtungen, wie im Falle Figur 1b, können von der Wechselwirkungstiefe erfasst werden. Hingegen liefert die mittels EMUS-Prüfverfahren erzeugte Plattenwelle 15 stets Messinformationen über die gesamte Platinendicke bzw. -länge. Aufgrund der zum Teil redundanten Messinformationen, die mit beiden Prüfverfahren erhalten werden, können die unterschiedlichen Wechselwirkungstiefen dazu genutzt werden, um die Messinformationen tiefenselektiv zu erfassen.

So können das Gefüge und die Werkstoffeigenschaften der härtbaren Stahllegierung sowie ein möglicher Schichtaufbau auf der Platine 2 bzw. dem Bauteil 5 erfasst werden, wobei die Schichtdicken der Diffusions- sowie der Restschicht (siehe hierzu Erläuterungen zu Figur 3a, b) mit Hilfe des mikromagnetischen Verfahrens erfasst werden. Der Grad der Austenitisierung sowie der anschließenden Martenitisierung, die sich während des Abschreckhärtens ausbildet, ergibt sich aus der Abhängigkeit der Signale des mikromagnetischen Sensors sowie des EMUS-Sensors vom magnetischen Zustand des Werkstoffes. Spannungs- und Dehnungszustände, die sich während der Umformvorgänge innerhalb des Bauteils einstellen, führen zu detektierbaren Signaländerungen in beiden Sensoren, d. h. sowohl innerhalb des mikro-magnetischen Sensors als auch des EMUS-Sensors. Die Ultraschallsignale des EMUS-Sensors können darüber hinaus dazu genutzt werden, um umformbedingte Risse und Einschnürungen im Blech zu detektieren. Die Möglichkeit zur Temperaturüberwachung ergibt sich aus der Temperaturabhängigkeit der Signale beider Sensoren. Darüber hinaus kann die Temperatur selektiv in der Beschichtung oder im Grundwerkstoff, d. h. innerhalb der härtbaren Stahllegierung bestimmt werden. Durch die selektive Beobachtung der Temperaturentwicklung in Beschichtung und in der härtbaren Stahllegierung während der Aufheiz- bzw. Erwärmungsphase kann eine Aussage über die thermische Leitfähigkeit der Beschichtung getroffen werden.

Durch die Integration des vorstehend beschriebenen Hybridsensors in den Ofen lassen sich während des Erwärmungsprozesses die Diffusionsschichtbildung, Austenitisierung sowie Temperatur während der Aufheizphase der Platine bzw. des Bauteils kontinuierlich erfassen, so dass bei allenfalls auftretenden Abweichungen von entsprechenden Sollwertvorgaben der Ofenprozess durch die Generierung von Regelsignalen adaptiv beeinflusst werden kann (feedback control). Ferner ist es möglich auf Basis der kontinuierlich sensoriell erfassten Zustandsgrößen über das jeweils innerhalb des Ofens erwärmten Bauteils entsprechende Steuersignale für nachfolgende Prozessschritte zu generieren (feed forward control).

Figur 4 zeigt hierzu einen Ofen 1 in dem oberflächennah zu der zu erwärmenden Platine 2 Hybridsensoren 12 integriert sind. Die Hybridsensoren 12 sind entlang der Aufheizstrecke längs des als Durchlaufofen ausgebildeten Ofen 1 integriert. Um die Hybridsensoren 12 vor Überhitzung durch die Ofentemperatur zu schützen, ist eine aktive Kühlung 19 integriert, die die Hybridsensoren 12 über einen entsprechenden Luft- oder Wasserkreislauf zu kühlen vermag. Vorzugsweise sind die in dem Durchlaufofen integrierten Hybridsensoren 12 jeweils zwischen den Förderrollen 20 implementiert, auf denen die Platinen 2 mit einer vorgebbaren Geschwindigkeit v in der Bilddarstellung gemäß Figur 4 von links nach rechts gefördert werden.

Insbesondere im Falle eines Durchlassofens, gemäß Bilddarstellung in Figur 4 liefern die am Ofeneingang angebrachten Hybridsensoren 12 Informationen über das Ausgangsmaterial der Platine 2, so dass der innerhalb des Ofens 1 stattfindende Erwärmungsprozess entsprechend angepasst werden kann.
Hingegen liefern Hybridsensoren 12 am Ofenausgang Informationen über den Endzustand der Platine, bspw. in Bezug auf Schichtbildung, hier insbesondere die Diffusionsschicht sowie die thermische Leitfähigkeit der Beschichtung sowie den Austenitisierungsgrad, der es ermöglicht, die Zusammenhänge zwischen Eingangs- und Ausgangsgrößen dieses Prozessschrittes im Rahmen einer Auswerte- und Steuereinheit 21 zu beurteilen. So werden die von den Hybridsensoren 12 erfassten Sensorsignale zentral kabelgebunden oder kabellos an die Auswerte- und Steuereinheit 21 übertragen, dort zusammengeführt und verarbeitet. In der Auswerte- und Steuereinheit 21 werden die Sensorsignale unter Vorgabe wenigstens eines Toleranzmaßes bzw. einer Toleranzbedingung ausgewertet und im Falle eines Nichtentsprechens der wenigstens einen Toleranzbedingung wenigstens ein Regel- und/oder Steuersignal generiert. Ferner ist eine Kontrolleinheit 22 vorgesehen, die die Betriebsparameter für den Betrieb des Ofens vorgibt und überwacht, d.h. die Haltezeit t im Ofen oder die Vorschubgeschwindigkeit v bei einem Durchlaufofen sowie die Aufheizgeschwindigkeiten dT/dt sowie die Maximaltemperatur T. An die Kontrolleinheit 22 wird das wenigstens eine Regel- und/oder Steuersignal von der Auswerte- und Steuereinheit 21 zur Beeinflussung der Betriebsparameter übertragen. Auf diese Weise lassen sich mittels eines geschlossenen Regelkreises die Stellgrößen des Ofenprozesses beeinflussen. Darüber hinaus können Unregelmäßigkeiten innerhalb der Platine 2, z. B. in Form wärmeinduzierter Risse in der Beschichtung erkannt und mögliche Ausschussteile zum frühestmöglichen Zeitpunkt ausgeschleust werden.

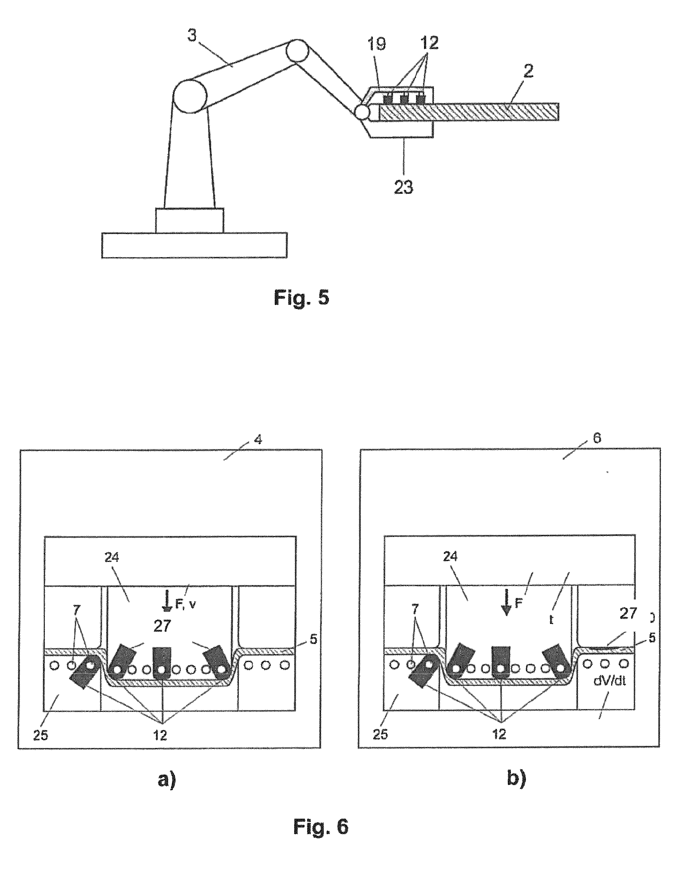

Die Integration der Hybridsensoren 12 ist auch in das Transferwerkzeug 3 möglich, mit dem die erwärmte Platine 2 aus dem Ofen 1 entnommen und für die weitere Verarbeitung in das Presswerkzeug übergeben wird. Figur 5 zeigt in schematisierter Darstellung ein derartiges Transferwerkzeug 3, das in Form eines mehrgelenkigen Roboterarms ausgebildet ist, der über einen Greifer 23 verfügt, zur Aufnahme der Platine 2. Innerhalb des Greifers 23 sind die Hybridsensoren 12 integriert, die aufgrund der hohen Temperatur der Platine 2 gleichfalls wie im Ofen 1 mit einem Kühlsystem 19 thermisch gekoppelt sind. Die mit Hilfe der im Trägerwerkzeug 3 integrierten Hybridsensoren gewonnenen Sensorsignale, denen Zustandsgrößen der Platine 2 zuordenbar sind, werden gleichsam in der Auswerte- und Steuereinheit 21 (siehe Figur 4) ausgewertet und dienen gleichfalls zur Generierung von Steuersignalen, die dem weiteren Umformvorgang zugeführt werden, im Sinne eines Feedforward Controls. Auch ist es möglich, entsprechende Steuersignale zur Nachjustierung des Ofenprozesses für die Erwärmung der unmittelbar nachfolgenden Platine einzusetzen, im Sinne eines sog. Feedback Controls.

Figur 6a zeigt eine schematische Schnittansicht durch ein Presswerkzeug 4, in dem ein Bauteil 5 warmumgeformt wird. Das Presswerkzeug 4 verfügt über einen Pressenstempel 24 sowie eine Pressenmatrize 25, in denen jeweils Kühlkanäle 7 zur Oberflächenkühlung eingebracht sind. Zusätzlich sind sowohl im Pressenstempel 24 als auch in der Pressenmatrize 25 Hybridsensoren 12 derart integriert, so dass sie während der Umformung im Kontakt oder in geringem Abstand zum Bauteil 5 appliziert sind. Die ohnehin innerhalb des Presswerkzeuges 4 integrierten Kühlkanäle 7 dienen ferner zur Kühlung der Hybridsensoren 12, so dass zu Zwecken der Sensorkühlung kein zusätzlicher Systemaufwand erforderlich ist. Die den Umformvorgang charakterisierenden Stellgrößen, betreffend die Umformgeschwindigkeit v sowie die Umformkraft F, werden adaptiv geregelt, um das Auftreten unzulässig hoher Spannungen und Dehnungen bzw. das Auftreten von Einschnürungen sowie Rissbildungen zu vermeiden und um eine zu hohe Abkühlung während der Umformung zu verhindern.

Die in Figur 6a beschriebenen Hybridsensoren 12 kommen auch beim Prozessschritt des Abschreckhärtens, der in Figur 6b illustriert ist, zum Einsatz. Das warmumgeformte Bauteil 5 verbleibt im Presswerkzeug 6 zwischen dem Pressenstempel 24 und der Pressenmatrize 25 eingespannt. Nach Beendigung der Warmumformung liefern die Hybridsensoren 12 Prüfinformationen über den Martenitisierungsgrad (Bainitisierungsgrad) sowie die Temperatur im Bauteil. Gleichzeitig kann bereits innerhalb des Presswerkzeuges 4 geprüft werden, ob das warmumgeformte Bauteil die Konformität aller Qualitätsmerkmale erfüllt, d. h. ob die Werkstoffeigenschaften der Stahllegierung, der Aufbau der Beschichtung sowie das Vorhandensein von Rissen und Einschnürungen die entsprechenden Soll-Vorgaben erfüllen. Die den im Anschluss an das Warmumformen nachfolgenden Abschreckhärteprozess bestimmenden Prozessparameter sind die Haltezeit t, die Haltekraft F sowie der Kühlmittelvolumenstrom dV/dt. Bei entsprechenden Abweichungen der sensorisch erfassten Zustandsgrößen von Sollvorgaben können eben die vorstehenden Prozessparameter im Wege einer Nachregelung oder Steuerung nachjustiert werden. Ferner ist es möglich das Auftreten von Stellgrößen, wie bspw. starke Verschmutzung oder Beschädigung des Presswerkzeuges selbst mit Hilfe der Hybridsensoren zu detektieren.

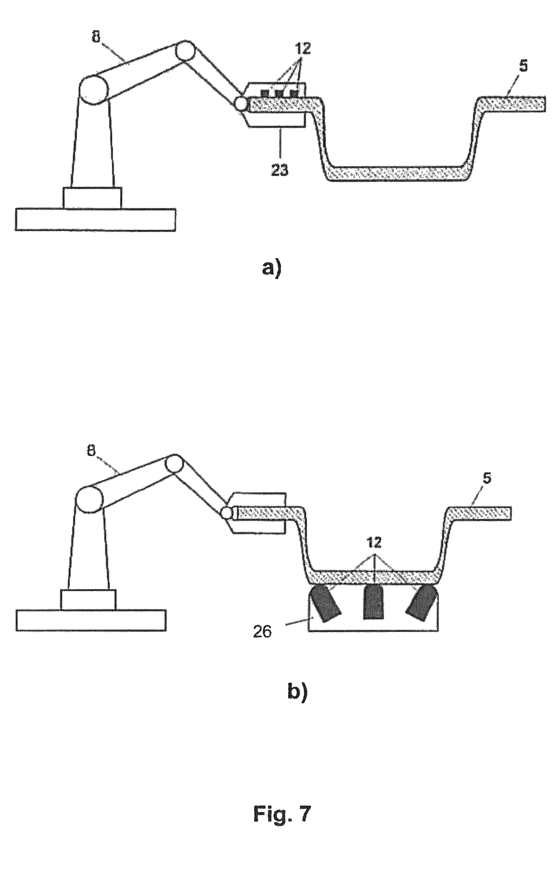

Zur Entnahme des abschreckgehärteten Bauteils 5 aus dem Presswerkzeug 4 nach dem Prozessschritt des Abschreckhärtens dient gleichsam ein als Roboterarm ausgebildetes Transferwerkzeug 8, das in Figur 7a, b illustriert ist. In Figur 7a ist ein Greifer 23 des Transferwerkzeuges 8 illustriert, in dem Hybridsensoren 12 integriert sind, die das aus dem Presswerkzeug 4 bzw. 6 entnommene Bauteil 5 unmittelbar nach Zugriff zu prüfen vermögen. Das Bauteil 5 weist typischerweise Temperaturen von weniger 200° C auf, so dass es einer aktiven Kühlung für die Hybridsensoren 12 innerhalb des Greifers 23 nicht bedarf.

Alternativ dazu kann zur Entnahme des abschreckgehärteten Bauteils 5 aus dem Presswerkzeug 4 bzw. 6 ein konventionell ausgebildetes Transferwerkzeug 8 gemäß Bilddarstellung in Figur 7b eingesetzt werden, dessen Greifer 23 keine Hybridsensoren 12 aufweist. In diesem Fall ist im Anschluss an das Abschreckhärten eine Prüfvorrichtung 26 vorgesehen, in der entsprechende Hybridsensoren 12 integriert sind, auf die das Bauteil 5 mit Hilfe des Transferwerkzeuges 8 aufgesetzt wird, um eine abschließende Qualitätsprüfung des pressgehärteten Bauteils 5 vornehmen zu können.

In beiden Fällen ist der Prüftakt zur Überprüfung der Bauteilqualität des pressgehärteten Bauteils gleich oder kleiner dem Produktionstakt des Presshärteprozesses, womit eine 100%ige Prüfung sämtlicher Bauteile 5 ermöglicht wird.

Mit Hilfe des vorstehend beschriebenen lösungsgemäßen Verfahrens sowie der damit verbundenen lösungsgemäßen Vorrichtung ergeben sich eine Reihe von Verbesserungen gegenüber dem Stand der Technik, die im Folgenden reihenhaft aufgezählt sind:
- kontinuierliche Prozessüberwachung und -regelung bzw. -steuerung anhand von sensoriell erfassten Zustandsgrößen und daraus abgeleiteten Qualitätsmerkmalen des presszuhärtenden Zwischenproduktes sowie auch des pressgehärteten Endproduktes,
- Vermeidung bzw. Reduzierung von Ausschussteilen,
- Möglichkeit zur Regelung und Optimierung des Ofenprozesses hinsichtlich Qualität und Kosten, insbesondere Minimierung der Verweildauer im Ofen,
- Möglichkeit zur Regelung und Optimierung des Warmumformens und Abschreckhärtens hinsichtlich Qualität und Kosten, hier insbesondere Minimierung der Haltezeit, der Reduktion der Taktzeit sowie des Kühlmittelbedarfes,
- direkte automatisierte 100%ige Prüfung aller produzierten Bauteile auf Fehler, insbesondere Einschnürungen, Risse etc, Eigenspannungen und mechanisch technologischen Eigenschaften, wie bspw. Härte, Zugfestigkeit, und
- Temperaturbestimmung im Bauteilinneren und nicht nur an einer Bauteiloberfläche.

### Bezugszeichenliste

- 1: Ofen
- 2: Platine
- 3: Transferwerkzeug zur Entnahme der Platine aus dem Ofen
- 4: Presswerkzeug
- 5: Bauteil
- 6: Presswerkzeug beim Abschreckhärten
- 7: Kühlkanäle
- 8: Transferwerkzeug zur Entnahme des Bauteils aus dem Presswerkzeug
- 9: Grundmaterial, Stahllegierung
- 10: Ausgangsbeschichtung, Restbeschichtung
- 11: Diffusionsschicht
- 12: Hybridsensor
- 13: Abhebung
- 14: Field of view des mikromagnetischen Sensors
- 15: hinlaufende Ultraschall-Plattenwelle
- 16: Rücklaufende Ultraschall-Plattenwelle
- 17: Riss, Einschnürung
- 18: Am Riss bzw. an der Einschnürung reflektierte Ultraschallwelle
- 19: Zusätzliche aktive Kühlung für die Kühlung der Sensoren
- 20: Rolle im Durchlaufofen
- 21: Auswerte- und Steuereinheit
- 22: Kontrolleinheit
- 23: Greifer
- 24: Pressenstempel
- 25: Pressenmatrize
- 26: Prüfvorrichtung

## Patentansprüche

1. Verfahren zum Herstellen eines pressgehärteten Bauteils umfassend wenigstens folgende, jeweils mittel- oder unmittelbar nacheinander abfolgende Prozessschritte:
a) Bereitstellen einer eine härtbare Stahllegierung aufweisenden Platine
und
b1) Erwärmen der Platine,
c1) Warmumformen der erwärmten Platine in einem Presswerkzeug zu einem warmumgeformten Bauteil und
d1) Abschreckhärten des in dem Presswerkzeug warmumgeformten Bauteils zum Erhalt des pressgehärteten Bauteils
oder
b2) Vorumformen der Platine ohne Erwärmen der Platine in ein vorumgeformtes Bauteil,
c2) Erwärmen des vorumgeformten Bauteils,
d2) Warmumformen der erwärmten vorumgeformten Bauteils in einem Presswerkzeug zu einem warmumgeformten Bauteil und
e2) Abschreckhärten des in dem Presswerkzeug warmumgeformten Bauteils zum Erhalt des pressgehärteten Bauteils
**dadurch gekennzeichnet, dass** die Platine während des Prozessschrittes b1) und
b2) sowie das sich aus der Platine ausbildende Bauteil während der Prozessschritte c1), d1) sowie c2) bis e2) jeweils sensorisch zum Erhalt von der Platine sowie dem sich aus der Platine ausbildenden Bauteil zuordenbaren Zustandsgrößen kontinuierlich geprüft werden,
dass die sensorisch erhaltenen Zustandsgrößen einer toleranzbelegten Bewertung unterzogen werden, bei der im Falle wenigstens einer während eines bestimmten Prozessschrittes erfassten, eine vorgegebene Toleranz überschreitenden Zustandsgröße ein Steuer- oder Regelsignal generiert wird, das Einfluss auf wenigstens einen zumindest den bestimmten Prozessschritt charakterisierenden Prozessparameter nimmt oder die betreffende Platine oder das betreffende Bauteil von der weiteren Abfolge der Prozessschritte ausschleust, und
dass die sensorische Erfassung mittels elektromagnetischer und/oder schallakustischer Sensoren zum Erhalt der der Platine sowie dem sich aus der Platine ausbildenden Bauteil zuordenbaren Zustandsgrößen im Wege eines zerstörungsfreien Prüfverfahrens durchgeführt wird.

2. Verfahren nach Anspruch 1,
**dadurch gekennzeichnet, dass** die Verfahrensschritte
des Erwärmens gemäß b1) und c2) jeweils auf die gesamte Platine oder wenigstens einen Teilbereich der Platine,
des Warmumformens gemäß c1) und d2) jeweils auf das gesamte vorumgeformte Bauteil oder wenigstens einen Teilbereich des vorumgeformten Bauteils,
sowie des Abschreckhärtens gemäß d1) und e2) jeweils die auf das gesamte warmumgeformte Bauteil oder wenigstens einen Teilbereich des warmumgeformten Bauteils angewendet werden.

3. Verfahren nach Anspruch 1 oder 2,
**dadurch gekennzeichnet, dass** die Platine vor und/oder nach den Prozessschritten b1) und b2) sowie das sich aus der Platine ausbildende Bauteil vor und/oder nach den Prozessschritten c1), d1) sowie c2) bis e2) jeweils sensorisch zum Erhalt von der Platine sowie dem sich aus der Platine ausbildenden Bauteil zuordenbaren Zustandsgrößen kontinuierlich geprüft werden, und
dass die sensorisch erhaltenen Zustandsgrößen einer toleranzbelegten Bewertung unterzogen werden, bei der im Falle wenigstens einer vor und/oder nach einem bestimmten Prozessschritt erfassten, eine vorgegebene Toleranz überschreitenden Zustandsgröße ein Steuersignal generiert wird, das Einfluss auf wenigstens einen zumindest den bestimmten Prozessschritt charakterisierenden Prozessparameter nimmt oder die betreffende Platine oder das betreffende Bauteil von der weiteren Abfolge der Prozessschritte ausschleust.

4. Verfahren nach einem der Ansprüche 1 bis 3,
**dadurch gekennzeichnet, dass** die sensorische Erfassung in den einzelnen Prozessschritten derart durchgeführt wird, dass folgende der Platine sowie dem Bauteil zuordenbare Zustandsgrößen und Qualitätsmerkmale (Parameter) erfasst werden:
- die härtbare Stahllegierung charakterisierende Werkstoffeigenschaften, zumindest umfassend Härte, Zugfestigkeit, Streckgrenze, Bruchdehnung und Gleichmaßdehnung,
- Geometriegrößen, zumindest umfassend eine der Platine oder dem Bauteil zuordenbare Dicke- und/oder Längendimension
- Schichtdicke wenigstens einer auf der Platine oder dem Bauteil aufgebrachten Materialschicht oder einer sich im Wege der Prozessschritte ausbildenden Materialschicht,
- Grad der Austenit- oder Martensitbildung in der Stahllegierung in Abhängigkeit einer jeweils vorherrschenden Prozesstemperatur,
- Mechanische Spannungen und Dehnungen in der Stahllegierung,
- Elektrische und thermische Leitfähigkeit der Stahllegierung sowie einer auf der Platine oder dem Bauteil aufgebrachten Materialschicht oder einer sich im Wege der Prozessschritte ausbildenden Materialschicht,
- Temperatur der Stahllegierung
- Temperaturen am Beginn und Ende einer sich in der Stahllegierung ausbildenden Martensitumwandlung

5. Verfahren nach einem der Ansprüche 1 bis 4,
**dadurch gekennzeichnet, dass** die im Prozessschritt a) bereitgestellte Platine vor dem Prozessschritt b1) oder b2) sensorisch zum Erhalt von der Platine zuordenbaren Zustandsgrößen geprüft wird, und dass die sensorisch erhaltenen Zustandsgrößen einer toleranzbelegten Bewertung unterzogen werden, bei der im Falle wenigstens einer eine vorgegebene Toleranz überschreitenden Zustandsgröße ein Steuersignal generiert wird, das Einfluss auf wenigstens einen zumindest den Prozessschritt b1) oder b2) charakterisierenden Prozessparameter nimmt oder die geprüfte Platine von der weiteren Abfolge der Prozessschritte ausschleust.

6. Verfahren nach einem der Ansprüche 1 bis 5,
**dadurch gekennzeichnet, dass** das Erwärmen der Platine im Prozessschritt b1) sowie das Erwärmen des vorumgeformten Bauteils im Prozessschritt c2) in einem Ofenprozess durchgeführt wird, bei dem die Platine oder das Bauteil in einen Ofen verbracht und nach Beendigung des Ofenprozesses mit einem Transferwerkzeug aus dem Ofen in das Presswerkzeug überführt wird, und dass während der Überführung die Platine oder das Bauteil sensorisch zum Erhalt von der Platine oder dem Bauteil zuordenbaren Zustandsgrößen sensorisch geprüft wird, und dass die sensorisch erhaltenen Zustandsgrößen einer toleranzbelegten Bewertung unterzogen werden, bei der im Falle wenigstens einer eine vorgegebene Toleranz überschreitenden Zustandsgröße ein Steuersignal generiert wird, das Einfluss auf wenigstens einen zumindest den Prozessschritt c1) oder d2) charakterisierenden Prozessparameter nimmt oder das die geprüfte Platine oder das geprüfte Bauteil von der weiteren Abfolge der Prozessschritte ausschleust.

7. Verfahren nach einem der Ansprüche 1 bis 6,
**dadurch gekennzeichnet, dass** nach Beendigung des Abschreckhärtens des in dem Presswerkzeug warmumgeformten Bauteils zum Erhalt des pressgehärteten Bauteils gemäß der Prozessschritte d1) oder e2), das pressgehärtete Bauteil mit einem Transferwerkzeug aus dem Presswerkzeug entnommen und einer Weiterverarbeitung zugeführt wird,
und dass während der Entnahme und Zuführung das pressgehärtete Bauteil sensorisch zum Erhalt von dem Bauteil zuordenbaren Zustandsgrößen sensorisch geprüft wird, und dass die sensorisch erhaltenen Zustandsgrößen einer toleranzbelegten Bewertung unterzogen werden, bei der im Falle wenigstens einer eine vorgegebene Toleranz überschreitenden Zustandsgröße ein Steuersignal generiert wird, das Einfluss auf wenigstens einen zumindest den Prozessschritt d1) oder e2) charakterisierenden Prozessparameter nimmt und/oder das das geprüfte pressgehärtete Bauteil von der weiteren Abfolge der Prozessschritte ausschleust.

8. Verfahren nach einem der Ansprüche 1 bis 7,
**dadurch gekennzeichnet, dass** die Bewertung der sensorisch erfassten Zustandsgrößen, die Generierung etwaiger Steuer- und Regelsignale sowie der Einfluss auf den wenigstens einen, den zumindest einen Prozessschritt charakterisierenden Prozessparameter unter Maßgabe einer Optimierung einer dem presszuhärtenden Bauteil zuordenbaren Bauteilqualität vorgenommen wird.

9. Verfahren nach einem der Ansprüche 1 bis 8,
**dadurch gekennzeichnet, dass** die generierten Regelsignale jene Prozessparameter eines Prozessschrittes beeinflussen, dem die Platine oder das Bauteil insitu ausgesetzt ist, und
dass die generierten Steuersignale jene Prozessparameter eines Prozessschrittes beeinflussen, dem die Platine oder das Bauteil in der Prozessabfolge als nächsten Prozessschritt zugeführt wird.

10. Vorrichtung zum Presshärten einer eine härtbare Stahllegierung aufweisenden Platine zur Herstellung eines pressgehärteten Bauteils, mit einem Ofen sowie einem Presswerkzeug, das über eine Abkühleinheit verfügt,
**dadurch gekennzeichnet, dass** in dem Ofen sowie in dem Presswerkzeug jeweils eine Sensorik, umfassend wenigstens einen elektromagnetischen und/oder schallakustischen Sensor, integriert ist, die kontinuierlich Sensorsignale generieren, die mittel- oder unmittelbar von einer in dem Ofen und/oder Presswerkzeug befindlichen Platine oder einem im Ofen und/oder Presswerkzeug befindlichen Bauteil erfasst sind,
dass eine Auswerte- und Steuereinheit vorgesehen ist, die die Sensorsignale unter Vorgabe wenigstens eines Toleranzmaßes auswertet und im Falle eines Nichtentsprechens des wenigstens einen Toleranzmaßes wenigstens ein Regel- und/oder Steuersignal generiert, sowie
wenigstens eine Kontrolleinheit, die Betriebsparameter für den Betrieb des Ofens sowie des Presswerkzeuges vorgibt und überwacht und an die das wenigstens eine Regel- und/ Steuersignale zur Beeinflussung der Betriebsparameter übertragbar ist.

11. Vorrichtung nach Anspruch 10,
**dadurch gekennzeichnet, dass** jeweils der elektromagnetische Sensor folgende elektromagnetische Eigenschaften der Platine und/oder des Bauteils zu erfassen vermag:
Barkhausen-Rauschen, Oberwellen einer tangentialen an einer Oberfläche der Platine oder des Bauteils vorherrschenden magnetischen Feldstärke,
Überlagerungspermeabilität und Mehrfrequenz-Wirbelstrom.

12. Vorrichtung nach Anspruch 10 oder 11,
**dadurch gekennzeichnet, dass** jeweils der schallakustische Sensor folgende schallakustische Eigenschaften der Platine und/oder des Bauteils zu erfassen vermag:
Schalllaufzeiten, Schallschwächung und Schallemissionen.

13. Vorrichtung nach einem der Ansprüche 10 bis 12,
**dadurch gekennzeichnet, dass** die Sensorik jeweils als Hybridsensor ausgebildet ist, der folgende elektromagnetische und schallakustische Eigenschaften der Platine und/oder des Bauteils zu erfassen vermag:
Barkhausen-Rauschen, Oberwellen einer tangentialen an einer Oberfläche der Platine oder des Bauteils vorherrschenden magnetischen Feldstärke, Überlagerungspermeabilität, Mehrfrequenz-Wirbelstrom und Schalllaufzeiten,
Schallschwächung und Schallemissionen aus der Platine oder dem Bauteil.

14. Vorrichtung nach Anspruch 13,
**dadurch gekennzeichnet, dass** wenigstens ein Hybridsensor jeweils in dem Ofen sowie dem Presswerkzeug an einer der Platine oder dem Bauteil zugewandten Ofen- oder Presswerkzeugoberfläche integriert ist, und dass in dem Ofen und dem Presswerkzeug jeweils ein den wenigstens einen Hybridsensor kühlendes Mittel eingebracht ist.

15. Vorrichtung nach einem der Ansprüche 10 bis 14,
**dadurch gekennzeichnet, dass** wenigstens ein Transferwerkzeug derart angeordnet und ausgebildet ist, dass das Transferwerkzeug eine im Ofen befindliche Platine oder ein Bauteil greift und zum Ablegen der Platine oder des Bauteils in das Presswerkzeug überführt,
dass in dem Transferwerkzeug wenigstens eine Sensorik integriert ist, die kontinuierlich Sensorsignale von der gegriffenen Platine oder dem Bauteil erzeugt, und
dass die Sensorsignale drahtgebunden oder drahtlos zur Auswerte- und Steuereinheit übertragbar sind.

16. Vorrichtung nach Anspruch 15,
**dadurch gekennzeichnet, dass** wenigstens ein weiteres Transferwerkzeug derart angeordnet und ausgebildet ist, dass das Transferwerkzeug ein im Presswerkzeug befindliches Bauteil greift und zur Weiterverarbeitung überführt,
dass in dem Transferwerkzeug wenigstens eine Sensorik integriert ist, die kontinuierlich Sensorsignale von dem Bauteil erzeugt, und
dass die Sensorsignale drahtgebunden oder drahtlos zur Auswerte- und Steuereinheit übertragbar sind.

## Claims

1. Method for producing a press-hardened component comprising at least the following process steps conducted either immediately consecutively in sequence or not:
a) Providing a blank containing a hardenable Steel alloy,
und
b1) Heating the blank,
c1) Hot forming the heated blank in a pressing tool to create a hot formed component and
d1) Quench hardening the component that has been hot formed it the pressing tool to obtain the presshardened component
or
b2) Preforming the blank to create a preformed component without heating the blank,
c2) Heating the preformed component,
d2) Hot forming the heated, preformed component in a pressing tool to create a hot formed component and
e2) Quench hardening the hot formed component in the pressing tool to obtain the press-hardened component
**characterised in that** the blank during process steps b1) and b2) and the component formed from the blank during process step c1), d1) and c2) to e2) are each continuously tested by sensor means to obtain state variables that are assignable to the blank and to the component that is created from the blank,
the state variables obtained by sensor means are subjected to a tolerance-weighted evaluation, in which a control or regulating signal is generated if at least one state variable detected during a given process step falls outside a predetermined tolerance, which control or regulating signal influences at least one process parameter that characterised as least the given process step, or diverts the blank or component concerned away from the subsequent sequence of process steps, and
the sensor-based detection is performed using electromagnetic and/or acoustic sensors to obtain state variables that are assignable to the blank and to the component formed from the blank in a nondestructive test method.

2. Method according to claim 1,
**characterised in that** the method steps
of heating according to b1) and c2) are each applied to the entire blank or at least a partial area of the blank,
of hot forming according to c1) and d2) are each applied to the entire preformed component or at least a partial area of the preformed component,
and of quench hardening according to d1) and e2) are each applied to the entire hot formed component or at least a partial area of the hot formed component.

3. Method according to claim 1 or 2,
**characterised in that** the blank is tested continuously by sensor means before and/or after the process steps b1) and b2) and the component created from the blank is tested continuously by sensor means before and/or after process steps c1), d1) and c2) to e2) in each case to obtain state variables that are assignable to the blank and to the component created from the blank,
and
the state variables obtained by sensor means undergo a tolerance-weighted evaluation, in which if at least one state variable detected before and/or after a given process step falls outside of a predetermined tolerance, a control signal is generated that influences at least one process parameter that characterises the given process step or diverts the blank or component concerned out of the subsequent sequence of process steps.

4. Method according to any one of claims 1 to 3,
**characterised in that** the detection by sensor means is carried out in the individual process steps in such manner that the following state variables and quality features (parameters) assignable to the blank and the component are detected:
- Material properties characterising the hardenable steel alloy, including at least hardness, tensile strength yield strength, elongation at break and Uniform elongation,
- Geometrical variables, including at least one thickness and/or length dimension assignable to the blank or the component
- Layer thickness of at least one material layer applied to the blank or the component, or a material layer that forms in the course of the process steps,
- Degree of austenitisation or martensitisation in the steel alloy depending on a prevailing process temperature in each case,
- Mechanical stresses and expansions in the steel alloy,
- Electrical and thermal conductivity of the steel alloy and of a material layer applied to the blank or the component or of a material layer that forms in the course of the process steps,
- Temperature of the steel alloy
- Temperatures at the start and end of the martensite conversion taking place in the steel alloy

5. Method according to any one of claims 1 to 4,
**characterised in that** the blank provided in process step a) is tested by sensor means before process step b1) or b2) to obtain assignable state variables from the blank, and that the state variables obtained by sensor means are subjected to a tolerance-weighted evaluation in which a control signal is generated that influences at least one process parameter that characterises the process step b1) or b2) if at least
one process parameter falls outside of a predetermined tolerance, or the tested blank is diverted out of the subsequent sequence of process steps.

6. Method according to any one of claims 1 to 5,
**characterised in that** the heating of the blank in process step b1) and the heating of the preformed component in process step c2) is carried out in a furnace process, in which the blank or the component is introduced into a furnace and after completion of the furnace process is transferred out of the furnace into the pressing tool with a transfer tool, and that during the transfer the blank or component is tested by sensor means to obtain state variables assignable to the blank or component, and that the state variables obtained by sensor means are subjected to a tolerance-weighted evaluation, in which a control signal is generated that influences at least one process parameter that characterises the process step c1) or d2) if at least one process parameter falls outside of a predetermined tolerance, or diverts the tested blank or component out of the subsequent sequence of process steps.

7. Method according to any one of claims 1 to 6,
**characterised in that** after the hot formed component has been quench hardened in the pressing tool to obtain the press-hardened component according to process step d1) or e2), the press-hardened component is removed from the pressing tool with a transfer tool and forwarded for further processing,
and that during the removal and forwarding the press-hardened component is tested by sensor means to obtain state variables assignable to the component, and that
the state variables obtained by sensor means are subjected to a tolerance-weighted evaluation, in which a control signal is generated that influences at least one process parameter that characterises the process step d1) or e2) if at least one process parameter falls outside of a predetermined tolerance, and/or diverts the tested press-hardened component out of the subsequent sequence of process steps.

8. Method according to any one of claims 1 to 7,
**characterised in that** the evaluation of the state variables detected by sensor means, the generation of any control and regulation signals and the influence on the at least one process parameter characterising the at least process step is carried out for the primary purpose of optimising a component quality that is assignable to the component that is to be press hardened.

9. Method according to any one of claims 1 to 8,
**characterised in that** the generated regulating signals influence those process parameters of a process step to which the blank or component is exposed *in situ,*
and
the generated control signals influence those process parameters of a process step to which the blank or component is being forwarded as the next process step in the process sequence.

10. Device for press hardening a blank containing a hardenable steel alloy to produce a press-hardened component, including a furnace and a pressing tool that is equipped with a cooling unit,
**characterised in that** a sensor system comprising at least one electromagnetic and/or acoustic sensor, is integrated in each of the furnace and the pressing tool, which sensors continuously generate sensor signals that are detected indirectly or directly by a blank located in the furnace and/or pressing tool or a component located in the furnace and/or pressing tool,
an evaluation and control unit is provided that evaluates the sensor signals with the application of at least one tolerance dimension, and at least one regulating and control signal is generated if the at least one tolerance dimension is not satisfied,
at least one monitoring unit that specifies and monitors the operating parameters for operation of the furnace and of the pressing tool, and to which the at least one regulating and control signal can be transmitted for influencing the operating parameters.

11. Device according to claim 10,
**characterised in that** the each electromagnetic sensor is able to detect the following electromagnetic properties of the blank and/or component:
Barkhausen noise, harmonics of a magnetic field strength tangential to a surface of the blank or the component, incremental permeability and multifrequency eddy current.

12. Device according to claim 10 or 11,
**characterised in that** each of the acoustic sensors is able to detect the following acoustic properties of the blank and/or component:
Sound propagation times, sound attenuation and sound emissions.

13. Device according to any one of claims 10 to 12,
**characterised in that** each sensor system is designed in the form of a hybrid sensor, which is capable of detecting the following electromagnetic and acoustic properties of the blank and/or component:
Barkhausen noise, harmonics of a magnetic field strength tangential to a surface of the blank or the component, incremental permeability, multifrequency eddy current and sound propagation times, sound attenuation and sound emissions from the blank or component.

14. Device according to claim 13,
**characterised in that** at least one hybrid sensor is integrated in each of the following locations: the furnace and the pressing tool on a surface of the furnace or the pressing tool closest to the blank or component, and that cooling media is introduced into the furnace and the pressing tool to cool the at least one hybrid sensor.

15. Device according to any one of claims 10 to 14,
**characterised in that** at least one transfer tool is arranged and designed such that the transfer tool engages in the blank or a component positioned in the furnace and transports the blank or component for the purpose of depositing the blank or component in the pressing tool,
at least one sensor system is integrated in the transfer tool and continuously generates sensor signals from the component, and
the sensor signals can be transmitted to the evaluation and control unit either by cable means or wirelessly.

16. Device according to claim 15,
**characterised in that** at least one further transfer tool is arranged and designed in such manner that the transfer tool engages in a component located in the pressing tool and transports it away for further processing,
at least one sensor system is integrated in the transfer tool, and continuously generates sensor signals from the component, and
the sensor signals can be transmitted to the evaluation and control unit either by cable means or wirelessly.

## Revendications

1. Procédé de fabrication d'un composant durci à la presse comprenant au moins les étapes de processus suivantes, se succédant les unes après les autres respectivement directement ou indirectement :
a) fourniture d'une platine présentant un alliage d'acier durcissable
et
b1) chauffage de la platine,
c1) façonnage thermique de la platine chauffée dans un outil de presse en un composant façonné thermiquement,
d1) durcissement par trempe du composant façonné thermiquement dans l'outil de presse afin d'obtenir le composant durci à la presse,
ou
b2) préfaçonnage de la platine ou chauffage de la platine en un composant préfaçonné,
c2) façonnage du composant préfaçonné ;
d2) façonnage thermique du composant préfaçonné thermiquement dans un outil de presse en un composant façonné thermiquement et
e2) durcissement par trempe du composant façonné thermiquement dans l'outil de presse pour obtenir le composant durci à a presse,
**caractérisé en ce que** la platine pendant l'étape de processus b1) et b2) ainsi que le composant réalisé à partir de la platine pendant les étapes de processus c1), d1 et c2) à e2) sont contrôlés en continu par capteurs afin d'obtenir des grandeurs d'état pouvant être coordonnées à la platine ainsi qu'au composant sortant de la platine,
les grandeurs d'état obtenues par capteurs sont soumises à une évaluation basée sur les tolérances, lors de laquelle un signal de commande ou de régulation est généré dans le cas où au moins une grandeur d'état dépassant une tolérance prescrite est détectée pendant un état de processus déterminée, l'influence sur au moins un paramètre de processus caractérisant au moins l'étape de processus déterminé prend ou exclut la platine concernée ou le composant concerné de la séquence supplémentaire d'étapes de processus et **en ce que** la détection par capteurs est effectuée au moyen de capteurs électromagnétiques et/ou acoustiques sonores pour obtenir les grandeurs d'état cordonnées à la platine ainsi qu'au composant sortant de la platine au cours d'un procédé d'essai sans destructions.

2. Procédé selon la revendication 1,
**caractérisé en ce que** les étapes de procédé
du chauffage selon b1) et c2) sont exécutées respectivement sur la totalité de la platine ou au moins une zone partielle de la platine,
du façonnage thermique selon c1) et d2 sont exécutées respectivement sur la totalité du composant préfaçonné ou au moins une zone partielle du composant préfaçonné ainsi que
du durcissement par trempe selon d1) et e2) sont exécutées respectivement sur la totalité du composant façonné thermiquement ou au moins une zone partielle du composant façonné thermiquement.

3. Procédé selon la revendication 1 ou 2,
**caractérisé en ce que** la platine avant et/ou après les étapes de processus b1) et b2) ainsi que le composant sortant de la platine avant et/ou après les étapes de processus c1), d1) ainsi que c2) à e2) sont contrôlés en continu par capteurs afin d'obtenir des grandeurs d'état pouvant être coordonnées à la platine ainsi qu'au composant sortant de la platine et
**en ce que** les grandeurs d'état obtenues par capteurs sont soumises à une évaluation basée sur les tolérances, lors de laquelle un signal de commande ou de régulation est généré dans le cas où au moins une grandeur d'état dépassant une tolérance prescrite est détectée pendant un état de processus déterminée, l'influence sur au moins un paramètre de processus caractérisant au moins l'étape de processus déterminée prend ou exclut la platine concernée ou le composant concerné de la séquence supplémentaire d'étapes de processus et **en ce que** la détection par capteurs est effectuée au moyen de capteurs électromagnétiques et/ou acoustiques sonores pour obtenir les grandeurs d'état cordonnées à la platine ainsi qu'au composant sortant de la platine au cours d'un procédé d'essai sans destructions.

4. Procédé selon une des revendications 1 à 3,
**caractérisé en ce que** la détection par capteurs est effectuée dans les étapes de processus individuelles, de sorte que suivant des grandeurs d'état et des caractéristiques de qualité (paramètres) coordonnés à la platine ainsi qu'au composant sont détectés :
- les propriétés de matériau caractérisant l'alliage d'acier durcissable, comprenant au moins la dureté, la résistance à la traction, la limite d'élasticité, l'allongement de rupture et l'allongement uniforme,
- des grandeurs géométriques, comprenant au moins une dimension d'épaisseur et/ou longueur pouvant être coordonnée à la platine ou au composant,
- l'épaisseur de couche d'au moins une couche de matériau appliquée sur la platine ou le composant ou d'une couche de matériau constituée au cours des étapes de processus,
- le degré de formation martensitique ou austénitique dans l'alliage d'acier en fonction d'une température de processus respectivement prédominante,
- des tensions et dilatations mécaniques dans l'alliage d'acier,
- la conductivité électrique et thermique de l'alliage d'acier ainsi qu'une couche de matériau appliquée sur la platine ou le composant ou d'une couche de matériau constituée au cours des étapes de processus,
- la température de l'alliage d'acier,
- les températures au début et à la fin d'une transformation martensitique se déroulant dans l'alliage d'acier.

5. Procédé selon une des revendications 1 à 4,
**caractérisé en ce que** la platine fournie à l'étape de processus a) avant l'étape de processus b1) ou b2) est contrôlée par capteurs afin d'obtenir les grandeurs d'état pouvant être coordonnées à la platine, et **en ce que** les grandeurs d'état obtenues par capteurs sont soumises à une évaluation basée sur les tolérances, lors de laquelle un signal de commande est généré dans le cas d'au moins une grandeur d'état dépassant une tolérance prescrite, l'influence sur au moins un paramètre de processus caractérisant l'étape de processus b1) ou b2) prend ou exclut la platine contrôlée de la séquence supplémentaire d'étapes de processus.

6. Procédé selon une des revendications 1 à 5,
**caractérisé en ce que** le chauffage de la platine à l'étape de processus b1) ainsi que le chauffage du composant préfaçonné à l'étape de processus c2) est effectué dans un processus de four, lors duquel la platine ou le composant est placé dans un four et après le fin du processus de four est transféré avec un outil de transfert hors du four dans l'outil de presse et **en ce que** pendant le transfert la platine ou le composant est contrôlé par capteurs afin d'obtenir les grandeurs d'état pouvant être coordonnées à a platine ou au composant, et **en ce que** les grandeurs d'état obtenues par capteurs sont soumises à une évaluation basée sur les tolérances, lors de laquelle un signal de commande est généré dans le cas d'au moins une grandeur d'état dépassant une tolérance prescrite, l'influence sur au moins un paramètre de processus caractérisant l'étape de processus c1) ou d2) prend ou exclut la platine contrôlée de la séquence supplémentaire d'étapes de processus.

7. Procédé selon une des revendications 1 à 6,
**caractérisé en ce que** après la fin du durcissement par trempe du composant façonné thermiquement dans l'outil de presse pour obtenir le composant durci par presse selon les étapes de processus d1) ou e2), le composant durci par presse est retiré de l'outil de presse avec un outil de transfert et introduit vers un traitement postérieur,
et **en ce que** pendant le retrait et l'introduction le composant durci à la presse est contrôlé par des capteurs pour obtenir des grandeurs d'état pouvant être coordonnées au composant, et **en ce que** les grandeurs obtenues par capteurs sont soumises à une évaluation basée sur les tolérances, lors de laquelle au signal de commande est généré dans le cas d'au moins une grandeur d'état dépassant une tolérance prescrite, l'influence sur au moins un paramètre de processus caractérisant l'étape de processus d1) ou e2) prend et/ou exclut le composant durci à la presse contrôlé de la séquence supplémentaire d'étapes de traitement.

8. Procédé selon une des revendications 1 à 7,
**caractérisé en ce que** l'évaluation des grandeurs d'état détectées par capteurs, la génération de quelconques signaux de commande et régulation ainsi que l'influence sur au moins un paramètre de processus caractérisant au moins une étape de processus sont entrepris en tenant compte d'une optimisation d'une qualité de composant pouvant être coordonnée à un composant durci à la presse.

9. Procédé selon une des revendications 1 à 8,
**caractérisé en ce que** les signaux de régulation générés influencent chaque paramètre de processus d'une étape de processus, auquel la platine ou le composant est exposé in situ, et
**en ce que** les signaux de commande générés influencent chaque paramètre de processus d'une étape de processus, auquel la platine ou le composant est introduit dans la séquence de processus comme étape de processus suivante.

10. Dispositif de durcissement à la presse d'une platine présente un alliage d'acier durcissable pour produire un composant durci à la pression, comportant un four ainsi qu'un outil de presse, qui dispose d'une unité de refroidissement, **caractérisé en ce que** dans le four ainsi que dans l'outil de presse respectivement des capteurs, comprenant au moins un capteur électromagnétique et/ou acoustique sonore, sont intégrés, qui génèrent des signaux de capteur en continu, qui sont détectés directement ou indirectement par une platine se trouvant dans un four et/ou outil de presse ou un composant se trouvant dans le four et/ou outil de presse,
**en ce que** une unité d'évaluation et de commande est prévue, qui évalue les signaux de capteur en prenant en compte au moins une tolérance et en cas d'une non correspondance d'au moins une tolérance au moins un signal de commande et/ou régulation est généré, ainsi que
au moins une unité de contrôle, qui prescrit les paramètres de fonctionnement pour le fonctionnement du four et de l'outil de presse et surveille et transmet au moins un des signaux de régulation et/ou commande pour influencer les paramètres de fonctionnement.

11. Dispositif selon la revendication 10,
**caractérisé en ce que** respectivement le capteur électromagnétique peut détecter les propriétés électromagnétiques de la platine et/ou du composant :
bruit de Barkhausen, ondes harmoniques d'une intensité de champ magnétique tangentiel sur une surface de la platine ou prédominant du composant, perméabilité à la superposition et courant de Foucault multifréquences.

12. Dispositif selon la revendication 10 ou 11,
**caractérisé en ce que** respectivement le capteur acoustique sonore peut détecter les propriétés acoustiques sonores de la platine et/ou du composant :
durée de propagation, atténuation du bruit et émissions de bruit.

13. Dispositif selon une des revendications 10 à 12,
**caractérisé en ce que** les capteurs sont conçus respectivement comme capteurs hybrides, qui peuvent détecter les propriétés électromagnétiques et acoustiques sonores de la platine et/ou du composant :
bruit de Barkhausen, ondes harmoniques d'une intensité de champ magnétique tangentiel sur une surface de la platine ou prédominant du composant, perméabilité à la superposition et courant de Foucault multifréquences et durée de propagation, atténuation du bruit et émissions de bruit.

14. Dispositif selon la revendication 13,
**caractérisé en ce que** au moins un capteur hybride est intégré respectivement dans le four ou l'outil de presse sur une surface de four ou d'outil de presse tournée vers le platine ou le composant, et **en ce que** dans le four et dans l'outil de presse est monté respectivement un moyen refroidissant au moins un capteur hybride.

15. Dispositif selon une des revendications 10 à 14,
**caractérisé en ce que** au moins un outil de transfert est disposé et conçu de telle sorte que l'outil de transfert saisisse une platine ou un composant se trouvant dans le four et soit transféré dans l'outil de presse pour déposer la platine ou le composant,
**en ce que** au moins un capteur est intégré dans l'outil de transfert, qui génère en continu les signaux de capteurs de la platine ou du composant saisi et **en ce que** les signaux de capteur peuvent être transmis de manière câblée ou sans fil vers l'unité d'évaluation et commande.

16. Dispositif selon la revendication 15,
**caractérisé en ce que** au moins un outil de transfert supplémentaire est disposé et conçu de telle sorte que l'outil de transfert saisisse un composant se trouvant dans l'outil de presse et le transfère en vue d'un traitement postérieur,
**en ce que** dans l'outil de transfert au moins un capteur est intégré, qui génère en continu des signaux de capteur à partir du composant et
**en ce que** les signaux de capteur peuvent être transmis de manière câblée ou sans fil vers l'unité d'évaluation et commande.
